# EUROPÄISCHE PATENTSCHRIFT

(11) **EP 3 947 928 B1**
(45) Veröffentlichungstag und Bekanntmachung des Hinweises auf die Patenterteilung: **26.04.2023**
(21) Anmeldenummer: 20713888.4
(22) Anmeldetag: 25.03.2020
(51) Int. Cl.: F01N 3/025, F01N 3/027, F01N 3/10, F01N 3/20, F01N 3/22, F01N 3/28, F01N 3/30, F01N 3/36, F01N 5/04, F01N 9/00

(54) **ABGASREINIGUNGSVORRICHTUNG, DAMIT AUSGESTATTETE BRENNKRAFTMASCHINE UND VERFAHREN ZUR ABGASREINIGUNG**
EXHAUST GAS AFTERTREATMENT APPARATUS, INTERNAL COMBUSTION ENGINES EQUIPPED THEREWITH AND METHOD OF EXHAUST GAS AFTERTREATMENT
DISPOSITIF DE POST-TRAITEMENT DES GAZ D'ÉCHAPPEMENT, MOTEUR À COMBUSTION INTERNE ÉQUIPPÉ AVEC CELUI ET PROCÉDÉ DE POST-TRAITEMENT DES GAZ D'ÉCHAPPEMENT

(30) Priorität: 27.03.2019 DE 102019204298; 25.11.2019 DE 102019218204
(43) Veröffentlichungstag der Anmeldung: 09.02.2022
(73) Patentinhaber: Fraunhofer-Gesellschaft zur Förderung der angewandten Forschung e.V., 80686 München (DE)
(72) Erfinder: SZOLAK, Robert, 79110 Freiburg (DE); SUSDORF, Alexander, 79110 Freiburg (DE)
(74) Vertreter: Friese Goeden Patentanwälte PartGmbB
(86) Internationale Anmeldenummer: PCT/EP2020/058261
(87) Internationale Veröffentlichungsnummer: WO 2020/193595

(56) Entgegenhaltungen:
- EP-A1- 2 388 451
- EP-A2- 1 533 489
- EP-A2- 2 154 344
- DE-A1-102004 019 659
- US-A1- 2008 120 966
- US-B2- 8 181 445

## Beschreibung

Die Erfindung betrifft eine Abgasreinigungsvorrichtung mit zumindest einer Abgasleitung und mit zumindest einem mit der Abgasleitung verbundenen Partikelfilter und/oder zumindest einem mit der Abgasleitung verbundenen Abgaskatalysator. Weiterhin betrifft die Erfindung eine Brennkraftmaschine mit einer solchen Abgasreinigungsvorrichtung sowie ein entsprechendes Verfahren zur Abgasreinigung. Vorrichtungen und Verfahren der eingangs genannten Art können in Kraftfahrzeugen und Schiffen zum Einsatz kommen, beispielsweise PKW, LKW oder auch Baumaschinen. Darüber hinaus ist der Einsatz dieser Vorrichtungen und Verfahren bei stationär betriebenen Brennkraftmaschinen möglich, beispielsweise zum Antrieb von Seilbahnen oder Stromerzeugern.

Zur Reduzierung des Schadstoffausstoßes von Brennkraftmaschinen ist es aus der Praxis bekannt, Abgaskatalysatoren im Abgasstrang der Brennkraftmaschine einzusetzen, welche Kohlenmonoxid und unverbrannte Kohlenwasserstoffe oxidieren und/oder Stickoxide reduzieren. Fallweise kommen darüber hinaus Partikelfilter zum Einsatz, welche mikroskopisch kleine Rußpartikel aus dem Abgasstrom entfernen und bei Beladung des Partikelfilters diesen durch Oxidation der Rußpartikel wieder regenerieren. Die US 2008/120966 A1, EP 2 388 451 A1, EP 2 154 344 A2, EP 1 533 489 A2), US 8 181 445 82 oder DE 10 2004 019659 A1 zeigen Abgasnachbehandlungsvorrichtungen mit Heizkatalysatoren.

Allen diesen Vorrichtungen und Verfahren zur Abgasreinigung ist gemeinsam, dass diese zum effizienten Betrieb eine vorgebbare Betriebstemperatur bzw. einen Betriebstemperaturbereich benötigen. Beispielsweise benötigen SCR-Systeme für eine Umsetzung von mehr als 90% eine Temperatur von mehr als 200°C. Ein 3-Wege-Katalysator benötigt eine Betriebstemperatur über etwa 300°C. Für die aktive Regeneration eines Partikelfilters müssen Temperaturen von mehr als 500°C eingestellt werden. Bei niedrigeren Temperaturen sinkt die Effizienz der genannten Partikelfilter und/oder Abgaskatalysatoren erheblich ab. Die Wirkungsgradsteigerung moderner Motoren führt jedoch dazu, dass die Abgastemperaturen kontinuierlich sinken. Abgastemperaturen unterhalb von 200°C sind bei vielen Betriebszuständen nicht mehr die Ausnahme, sondern die Regel. Darüber hinaus besteht ein Bedürfnis, die Abgasreinigung nach einem Kaltstart des Motors rasch auf Betriebstemperatur zu bringen. Hierdurch wird die Kaltstartphase verkürzt und der Schadstoffausstoß reduziert. Insbesondere die Teilelektrifizierung des Antriebsstrangs führt dazu, dass Teilstrecken ohne Zuhilfenahme der Brennkraftmaschine zurückgelegt werden, welche sodann auf einer einzigen Fahrt unter Umständen mehrfach einen Kaltstart durchlaufen muss.

Zur Lösung dieses Problems ist aus Friedrich Graf, Stefan Lauer, Johannes Hofstetter, Mattia Perugini: Optimales Thermomanagement und Elektrifizierung in 48-V-Hybriden; MTZ, 01. Oktober 2018, 42 - 47 bekannt, eine elektrische Widerstandsheizung im Abgasstrang vor dem Abgaskatalysator anzuordnen. Diese kann mit einer elektrischen Heizleistung von 3 kW bis 4 kW erwärmt werden. Die so erzeugte Wärme wird über den Abgasstrom in den Abgaskatalysator eingetragen, sodass dieser seine Betriebstemperatur schneller oder überhaupt erreicht und so eine effiziente Abgasnachbehandlung ermöglicht wird.

Nachteilig an diesem bekannten Verfahren ist einerseits die hohe elektrische Heizleistung, welche mit üblichen 12-Volt-Bordnetzen nicht bereitgestellt werden kann. Darüber hinaus ist die Widerstandsheizung im Vollstrom der Abgasleitung angeordnet und erzeugt bei Volllast oder vollastnahen Betriebszuständen der Brennkraftmaschine einen erhöhten Abgasgegendruck, welcher die Leistung der Brennkraftmaschine reduziert und/oder den Verbrauch erhöht.

Es besteht daher unverändert ein Bedarf an Verfahren und Vorrichtungen zur Abgasreinigung, welche auch bei niedrigen Abgastemperaturen im Teillastbetrieb zuverlässig funktionieren, ein schnelles Aufheizen des Abgasnachbehandlungssystems nach einem Kaltstart ermöglichen und gleichzeitig bei Volllast der Brennkraftmaschine eine unerwünschte Erhöhung des Kraftstoffverbrauches vermeiden.

Die Aufgabe wird erfindungsgemäß durch eine Vorrichtung gemäß Anspruch 1, eine Brennkraftmaschine nach Anspruch 8 und ein Verfahren nach Anspruch 9 gelöst. Vorteilhafte Weiterbildungen der Erfindung finden sich in den Unteransprüchen.
in einigen Ausführungsformen der Erfindung wird eine Abgasreinigungsvorrichtung mit zumindest einer Abgasleitung vorgeschlagen. Mit der zumindest einen Abgasleitung ist zumindest ein Partikelfilter und/oder zumindest ein Abgaskatalysator verbunden. Somit ist die Abgasleitung dazu eingerichtet, die Abgase vom Ort ihrer Entstehung, beispielsweise einer Brennkraftmaschine, zu einer Abgasreinigungsvorrichtung und schließlich von der Abgasreinigungsvorrichtung in die Umgebung zu leiten. Unter einer Abgasleitung werden somit im Sinne der vorliegenden Beschreibung Einrichtungen zur Führung eines Abgasstromes verstanden, beispielsweise Abgasrohre, Abgaskrümmer und/oder ein Gehäuse eines Abgaskatalysators oder eines Partikelfilters.

Die Abgasreinigungsvorrichtung kann in einigen Ausführungsformen der Erfindung zumindest einen Partikelfilter enthalten. In anderen Ausführungsformen der Erfindung kann alternativ oder zusätzlich zumindest ein Abgaskatalysator vorhanden sein. Ein Abgaskatalysator kann ausgewählt sein aus einem Oxidationskatalysator und/oder einem SCR-Katalysator und/oder einem 3-Wege-Katalysator und/oder einem Speicherkatalysator. Der Abgaskatalysator kann somit dazu eingerichtet sein, unverbrannte Kohlenwasserstoffe und/oder Kohlenmonoxid und/oder Stickstoffmonoxid zu oxidieren, sodass der Anteil dieser Gase am Abgasmassenstrom reduziert und der Anteil an CO₂ und H₂O erhöht ist. Alternativ oder zusätzlich kann ein Abgaskatalysator dazu vorgesehen sein, den Anteil an Stickoxiden (NOₓ) zu reduzieren, beispielsweise durch Umsetzung mit NH₃ zum Beispiel aus Harnstoff. Hierzu können in einigen Ausführungsformen der Erfindung getrennte Abgaskatalysatoren vorhanden sein. In anderen Ausführungsformen der Erfindung kann ein einziger Abgaskatalysator sowohl die Reduktion der Stickoxide als auch die Oxidation von Kohlenmonoxid und Kohlenwasserstoffen ermöglichen.

Beispielsweise können mit der Abgasleitung folgende Kombinationen von Partikelfiltern und/oder Abgaskatalysatoren verbunden sein:
1. Ausführungsbeispiel: Oxidationskatalysator - SCRbeschichteter Rußpartikelfilter - SCR-Katalysator - Ammoniak Oxidationskatalysator
2. Ausführungsbeispiel: NOx-Speicherkatalysator - SCRbeschichteter Rußpartikelfilter - SCR-Katalysator - Ammoniak Oxidationskatalysator
3. Ausführungsbeispiel: Oxidationskatalysator - Rußpartikelfilter - SCR-Katalysator
4. Ausführungsbeispiel:
   3-Wege-Katalysator - Rußpartikelfilter
5. Ausführungsbeispiel: 3-Wege-Katalysator
6. Ausführungsbeispiel: Oxidationskatalysator - Rußpartikelfilter - NOx-Speicherkatalysator
7. Ausführungsbeispiel: Oxidationskatalysator - Rußpartikelfilter - SCR-Katalysator

Um den Partikelfilter und/oder den mindestens einen Abgaskatalysator in Betriebszuständen mit niedriger Last und niedrigen Abgastemperaturen bzw. nach einem Kaltstart auf Betriebstemperatur zu bringen, wird erfindungsgemäß vorgeschlagen, zumindest einen Heizkatalysator im Teilstrom des Abgasstranges anzuordnen. Sofern in der nachfolgenden Beschreibung und in den Ansprüchen von "einem" Heizkatalysator gesprochen wird, bezeichnet dies einen unbestimmten Artikel und kein Zahlwort. Das Vorhandensein einer Mehrzahl von Heizkatalysatoren wird dadurch nicht ausgeschlossen. Der Heizkatalysator ist dazu vorgesehen, Kraftstoff mit Abgas umzusetzen. Diese Umsetzung kann Oxidationsreaktionen und/oder Reformierreaktionen und/oder Crackreaktionen umfassen. Die Brennkraftmaschine kann dazu so gesteuert werden, dass eine Abgaszusammensetzung erreicht wird, welche zu einer vorgebbaren, bevorzugten Umsetzung des Kraftstoffes im Heizkatalysator führt. Darüber hinaus kann die im jeweiligen Betriebszustand gewünschte Umsetzung des Kraftstoffes im Heizkatalysator durch die zugeführte Kraftstoffmenge beeinflusst werden.

In einigen Ausführungsformen der Erfindung kann die im jeweiligen Betriebszustand gewünschte Umsetzung des Kraftstoffes im Heizkatalysator ausschließlich durch die zugeführte Kraftstoffmenge beeinflusst werden, während die Brennkraftmaschine selbst so betrieben wird, dass diese der jeweiligen Lastanforderung optimal entspricht. Beispielsweise kann die Brennkraftmaschine mit optimalem Verbrauch, optimaler Leistung, optimalem Wartungsintervall oder optimalem Drehmoment betrieben werden, ohne dass auf die daraus resultierende Abgaszusammensetzung Rücksicht genommen werden muss. Anders als nach dem Stand der Technik erforderlich, muss somit nicht zwingend aufgrund der Erfordernisse der Abgasnachbehandlung ein Kompromiss in der Betriebsführung der Brennkraftmaschine eingegangen werden, welcher zu erhöhtem Verbrauch, Ölverdünnung, thermischen Problemen oder reduzierter Leistung führt.

Beispielsweise kann in einem ersten Betriebszustand aus Otto- oder Dieselkraftstoff, welcher vergleichsweise langkettige Kohlenwasserstoffe enthält, im Heizkatalysator ein Reformat erzeugt werden. Für die Zwecke der vorliegenden Beschreibung wird unter einem Reformat ein Gemisch aus vorwiegend kurzkettigen Alkenen und/oder Kohlenmonoxid und/oder Wasserstoff verstanden. Das durch die im Heizkatalysator erzeugte Reformat kann bereits bei niedrigeren Temperaturen auf einem Abgaskatalysator und/oder Partikelfilter exotherm umgesetzt werden und so unmittelbar zur Erwärmung dieser Bauteile Verwendung finden. Im ersten Betriebszustand wird der Heizkatalysator mit λ << 1 betrieben.

Weiterhin kann in einem zweiten Betriebszustand ein Otto- oder Dieselkraftstoff weitgehend oder vollständig oxidiert werden, um so durch exotherme Reaktion Wärme in das Abgas einzutragen, welche zur Aufheizung eines Abgaskatalysators und/oder eines Partikelfilters verwendet werden kann. Im zweiten Betriebszustand wird der Heizkatalysator mit λ ≥ 1 betrieben. Der zweite Betriebszustand kann unmittelbar nach dem Kaltstart gewählt werden, um einen Abgaskatalysator auf Zündtemperatur zu bringen. Im Anschluss daran kann auf den ersten Betriebszustand umgeschaltet werden, welche eine höhere Leistung bereitstellen kann, um auch nachfolgende Komponenten wie beispielsweise einen Partikelfilter oder einen SCR-Katalysator zu heizen. Der zweite Betriebszustand kann nach dem Kaltstart für etwa 20 sec. Bis etwa 120 sec. Anliegen, ehe in den ersten Betriebszustand geschaltet wird. Dies kann erfolgen, wenn ein Oxidationskatalysator des Abgasnachbehandlungssystems eine Temperatur von mehr als etwa 150°C oder mehr als etwa 160°C oder mehr als etwa 180°C oder mehr als etwa 200°C erreicht hat.

In einem dritten Betriebszustand kann ein Mischbetrieb vorliegen, in welchem einerseits durch exotherme Umsetzung des Kraftstoffes im Heizkatalysator Wärme erzeugt wird und andrerseits ein Teil des Kraftstoffes in ein Reformat umgesetzt wird.

Darüber hinaus kann in jedem der genannten Betriebszustände ein Teil des Kraftstoffes im Heizkatalysator lediglich verdampft werden, ohne dass dieser Teil chemisch umgesetzt wird. Auch dieser Kraftstoffdampf kann auf einem Abgaskatalysator und/oder Partikelfilter exotherm umgesetzt werden und so unmittelbar zur Erwärmung dieser Bauteile Verwendung finden.

Das Abgas kann in einigen Ausführungsformen der Erfindung Sauerstoff und/oder Stickstoff und/oder Stickoxide und/oder Wasserstoff und/oder Wasser und/oder Kohlenmonoxid und/oder Kohlendioxid und/oder Kohlenwasserstoffe enthalten oder daraus bestehen. Das Abgas kann in einigen Ausführungsformen der Erfindung einen Sauerstoffgehalt von etwa 14% bis etwa 17% oder von etwa 10% bis etwa 14% aufweisen. Im erfindungsgemäßen Heizkatalysator können einige oder alle der genannten Bestandteile mit dem zugeführten Kraftstoff reagieren.

Erfindungsgemäß wird vorgeschlagen, dass der Heizkatalysator ein Gehäuse aufweist, welches einen Einlass und einen Auslass aufweist und welches so mit der Abgasleitung verbunden ist, dass zumindest in einigen Betriebszuständen ein Teilstrom des in der Abgasleitung strömenden Abgases durch den Einlass in das Gehäuse zugeführt und durch den Auslass aus dem Gehäuse in die Abgasleitung stromabwärts des Einlasses abgeführt werden kann. Anders als bei bekannten Systemen wird somit nicht der volle Abgasstrom durch den Heizkatalysator geleitet, sondern lediglich ein Teilstrom. Völlig überraschend wurde erkannt, dass dies zur Erwärmung des Abgasnachbehandlungssystems hinreichend ist und gleichzeitig bei Volllast oder volllastnahen Betriebszuständen den Abgasgegendruck verringert, da weiterhin ein größerer Querschnitt oder sogar der gesamte Querschnitt der Abgasleitung zur Abfuhr des Abgases zur Verfügung steht, wenn der Heizkatalysator nicht benötigt wird. Die Erfindung vereint somit einerseits einen geringen Abgasgegendruck und damit einen verbrauchseffizienten Betrieb der Brennkraftmaschine, insbesondere auch im Volllastbereich, und andererseits eine rasche Aufheizung der Abgasnachbehandlungssysteme nach einem Kaltstart oder im unteren Teillastbereich bei geringen generischen Abgastemperaturen.

Erfindungsgemäß betrifft diese eine Abgasreinigungsvorrichtung mit zumindest einer Abgasleitung und mit zumindest einem mit der Abgasleitung verbundenen Partikelfilter und/oder zumindest einem mit der Abgasleitung verbundenen Abgaskatalysator, wobei stromaufwärts des Partikelfilters bzw. des Abgaskatalysators ein Heizkatalysator angeordnet ist, welcher dazu eingerichtet ist, zugeführten Kraftstoff mit Abgas umzusetzen, wobei der Heizkatalysator ein Gehäuse aufweist, welches einen Einlass und einen Auslass aufweist und welches so mit der Abgasleitung verbunden ist, dass ein Teilstrom des in der Abgasleitung strömenden Abgases durch den Einlass in das Gehäuse zugeführt und durch den Auslass aus dem Gehäuse in die Abgasleitung stromabwärts des Einlasses abgeführt werden kann, wobei das Gehäuse des Heizkatalysators vollständig innerhalb der Abgasleitung angeordnet ist.

In einigen Ausführungsformen der Erfindung kann dem Heizkatalysator in einigen Betriebszuständen zusätzlich zum Abgas auch Umgebungsluft zugeführt werden, um die Umsetzung des Kraftstoffes zu beeinflussen. Die Umgebungsluft kann dem Heizkatalysator über die Abgasleitung oder über eine separate Luftzufuhreinrichtung zugeführt werden. Die Luftzufuhreinrichtung kann dazu eingerichtet sein, die Menge der zugeführten Umgebungsluft zu steuern oder zu regeln. Hierzu kann die Luftzufuhreinrichtung ein Regelventil und/oder eine Drosselklappe enthalten.

In einigen Ausführungsformen der Erfindung kann der in den Heizkatalysator geleitete Teilstrom einen Anteil von etwa 10% bis etwa 90% oder von etwa 15% bis etwa 50% oder von etwa 10% bis etwa 20% oder von etwa 15% bis etwa 30% betragen. In einigen Ausführungsformen der Erfindung kann der durch den Heizkatalysator geleitete Teilstrom in einigen Betriebszuständen auch weniger als etwa 10% oder weniger als etwa 5% oder weniger als etwa 1% oder etwa 0% betragen, d.h. der Heizkatalysator wird nicht von Abgas durchströmt, wenn eine zusätzliche Aufheizung des Abgases bzw. der Abgasreinigungsvorrichtung nicht gewünscht ist.

Erfindungsgemäß enthält die Abgasreinigungsvorrichtung eine Lochplatte, welche dazu eingerichtet ist, dem Heizkatalysator das Abgas zuzuführen. Die Lochplatte kann aus einem Metall oder einer Legierung bestehen und das eigentliche Katalysatormaterial bzw. den Katalysatorträger zumindest teilweise oder vollflächig bedecken. Die Lochplatte kann in einigen Ausführungsformen der Erfindung eben sein. In anderen Ausführungsformen der Erfindung kann die Lochplatte in zumindest einer Raumrichtung gekrümmt sein, so dass diese beispielsweise die Form einer Kugelkalotte oder einer Zylindermantelfläche aufweist.

Die Lochplatte enthält eine Mehrzahl von Bohrungen, Poren oder Öffnungen, durch welche das Abgas strömt, um mit dem Heizkatalysator in Kontakt zu treten. Die Bohrungen, Poren oder Öffnungen können regelmäßig oder unregelmäßig angeordnet sein. Die Bohrungen oder Öffnungen können in einigen Ausführungsformen der Erfindung einen Durchmesser von etwa 0,5 mm bis etwa 1,5 mm oder von etwa 0,3 mm bis etwa 1,0 mm oder von etwa 1,0 mm bis etwa 3,5 mm aufweisen. Die Bohrungen, Poren oder Öffnungen können einen polygonalen, runden oder unregelmäßig geformten Querschnitt aufweisen. Anzahl, Abstand, Größe und Anordnung der Bohrungen oder Öffnungen können mit einer Computersimulation bestimmt werden, um den Zutritt des Abgases zum Katalysatorträger bzw. zum Heizkatalysator zu homogenisieren und/oder um die gewünschte Heizleistung zu erhalten und/oder um eine vorgebbare Größe des abgezweigten Teilstroms des Abgases und/oder den zulässigen Druckverlust zu erhalten. Hierdurch kann eine effiziente Ausnutzung des gesamten Heizkatalysators ermöglicht werden, ohne dass einzelne Hotspots innerhalb des Heizkatalysators entstehen oder Raumbereiche, welche nur in geringem Umfang oder gar nicht an der Umsetzung des Kraftstoffes mit dem Abgas beteiligt sind. In einigen Ausführungsformen der Erfindung kann die Lochplatte ein poröses Material enthalten oder daraus bestehen, beispielsweise einen Sinterkörper oder einen Schaum oder ein Gewirk oder ein Geflecht oder ein Gestrick.

In einigen Ausführungsformen der Erfindung kann der Heizkatalysator einen elektrisch beheizbaren Träger aufweisen. In anderen Ausführungsformen der Erfindung kann alternativ oder zusätzlich das Gehäuse und/oder ein Gehäuseteil und/oder eine Kraftstoffplatte und/oder eine Lochplatte elektrisch beheizbar sein bzw. zumindest zeitweilig elektrisch beheizt werden. Hierdurch kann der Heizkatalysator durch elektrische Zusatzenergie aus dem Bordnetz vorgeheizt werden, sodass zunächst der Heizkatalysator auf Betriebstemperatur gebracht wird, um dann mittels chemischer und elektrischer Energie unter Einsatz des Heizkatalysators die übrigen Komponenten des Abgasnachbehandlungssystems zu erwärmen. Erfindungsgemäß ist es somit nicht erforderlich, das gesamte Abgasnachbehandlungssystem elektrisch zu beheizen und auf Betriebstemperatur zu bringen. Vielmehr kann nur der Heizkatalysator elektrisch beheizt werden. Da der Heizkatalysator vor Fahrtwind geschützt motornah eingebaut werden kann und kleinere Abmessungen aufweisen kann als ein Abgaskatalysator oder ein Partikelfilter, kann die notwendige elektrische Heizenergie reduziert sein.

In einigen Ausführungsformen der Erfindung kann der Heizkatalysator einen elektrisch leitfähigen Träger aufweisen, welcher durch Widerstandsheizung durch direkten Stromfluss erwärmbar ist. In anderen Ausführungsformen der Erfindung kann in den Träger und/oder das Gehäuse und/oder weitere Teile des Heizkatalysators ein Heizdraht eingebettet sein und/oder der Träger des Heizkatalysators kann mit einer Wandheizung thermisch verbunden sein.

In einigen Ausführungsformen der Erfindung kann der Heizkatalysator mit einer elektrischen Leistung von etwa 500 W bis etwa 1500 W oder zwischen 700 W und etwa 1300 W oder zwischen etwa 800 W und etwa 1200 W oder zwischen 500 W und etwa 4000 W oder zwischen 700 W und etwa 3000 W oder zwischen 800 W und etwa 2000 W vorgewärmt werden. Da der Heizkatalysator aufgrund seiner geringeren Abmessungen im Vergleich zum Abgaskatalysator eine geringere Wärmekapazität aufweist, kann der Heizkatalysator in kurzer Zeit seine Betriebstemperatur erreichen. In einigen Ausführungsformen der Erfindung kann die elektrische Beheizung zwischen etwa 5 s und etwa 60 s oder zwischen etwa 10 s und etwa 30 s oder zwischen etwa 5 s und etwa 20 s betrieben werden. In einigen Ausführungsformen der Erfindung kann die elektrische Beheizung betrieben werden, bis der Heizkatalysator eine Temperatur von etwa 200°C bis etwa 700°C oder von etwa 300°C bis etwa 500°C oder von etwa 250°C bis etwa 350°C erreicht hat.

In einigen Ausführungsformen der Erfindung kann auf der, der Lochplatte gegenüberliegenden Seite des Heizkatalysators eine Kraftstoffplatte angeordnet sein. Die Kraftstoffplatte führt zu einer homogenen Verteilung des Kraftstoffes, sodass dieser gleichmäßig mit dem Heizkatalysator bzw. dem Katalysatorträger in Kontakt kommt. Hierzu kann der Kraftstoff mittels einer Pumpe auf die Kraftstoffplatte aufgebracht werden, wo er zu einem dünnen Film verläuft. Durch Konvektion und Strahlung wird Wärme in die Kraftstoffplatte eingebracht, sodass der Kraftstofffilm verdampft und beim Aufsteigen in den Katalysatorträger des Heizkatalysators eindringt. Dort erfolgt wie bereits beschrieben die Umsetzung des Kraftstoffes mit dem Abgas, sodass erwärmtes Abgas, Reformat und/oder Kraftstoffdampf in die Abgasleitung abgegeben werden kann. Um eine gleichmäßige Erwärmung der Kraftstoffplatte zu ermöglichen, kann diese aus einem Metall oder einer Legierung mit guter Wärmeleitfähigkeit hergestellt sein, beispielsweise aus Aluminium oder Kupfer.

In einigen Ausführungsformen der Erfindung kann die Kraftstoffplatte mit einer kapillaren Transporteinrichtung versehen sein. Eine solche kapillare Transporteinrichtung kann in Form von eingefrästen, geätzten oder additiv gefertigten Kanälen hergestellt sein. Form, Anzahl und Größe solcher Kanäle können wiederum in Computersimulationen optimiert werden, um eine gleichmäßige Verteilung des Kraftstoffes auf der Kraftstoffplatte zu ermöglichen. In anderen Ausführungsformen der Erfindung kann auf der Kraftstoffplatte ein Vlies, ein Gewirk, ein Gestrick, ein Schaum und/oder ein Docht angeordnet sein, welche durch Kapillarkräfte zum Transport des Kraftstoffes innerhalb der durch die Kraftstoffplatte definierten Ebene führen.

In einigen Ausführungsformen der Erfindung kann das Gehäuse des Heizkatalysators einen Durchmesser bzw. einen Umkreis zwischen etwa 55 mm und etwa 120 mm oder zwischen etwa 65 mm und etwa 100 mm aufweisen. Die Höhe eines solchen Gehäuses kann zwischen etwa 20 mm und etwa 50 mm betragen. Hierdurch benötigt der Heizkatalysator nur wenig Bauraum und weist geringe thermische Massen auf, was zum raschen Ansprechen des Heizkatalysators führt. Gleichwohl ist die vom Heizkatalysator bereitgestellte chemische und elektrische Heizleistung groß genug, um gängige Abgasnachbehandlungssysteme rasch auf Betriebstemperatur aufzuheizen. Für Großmotoren, beispielsweise zur Anwendung in Lkw, Schiffen, Baumaschinen oder den Stationärbetrieb, können selbstverständlich auch größere Heizkatalysatoren Verwendung finden.

Erfindungsgemäß ist in der Abgasleitung zwischen Einlass und Auslass eine Druckreduktionseinrichtung vorhanden.

Diese kann einen Differenzdruck erzeugen mit der Wirkung, dass der Abgasdruck am Einlass des Heizkatalysators größer ist als am Auslass des Heizkatalysators, sodass ein Teilstrom des Abgases durch den Einlass in das Gehäuse des Heizkatalysators strömt und den Heizkatalysator über den Auslass wieder verlässt. Die von der Druckreduktionseinrichtung erzeugte Druckdifferenz kann in einigen Ausführungsformen der Erfindung zwischen etwa 5 mbar und etwa 50 mbar oder zwischen etwa 8 mbar und etwa 30 mbar betragen. Die von der Druckreduktionseinrichtung erzeugte Druckdifferenz kann größer sein, als der bei der Durchströmung des Heizkatalysators auftretende Druckverlust. Hierdurch wird sichergestellt, dass ein hinreichend großer Teilstrom des Abgases durch den Heizkatalysator geleitet wird.

In einigen Ausführungsformen der Erfindung kann die Druckreduktionseinrichtung schaltbar sein, sodass diese in einem ersten Betriebszustand einen größeren Abgasgegendruck erzeugt und in einem zweiten Betriebszustand einen geringeren Abgasgegendruck erzeugt. Somit kann in Betriebszuständen, welche einen Betrieb des Heizkatalysators erfordern, der Abgasgegendruck am Eingang des Heizkatalysators vergrößert werden, sodass ein nennenswerter Teilstrom des Abgases durch den Heizkatalysator strömt. Wenn der Heizkatalysator nicht benötigt wird, kann der Abgasgegendruck der Druckreduktionseinrichtung reduziert werden, um den Gaswechsel der Brennkraftmaschine bei Volllast nur in geringerem Umfang zu beeinträchtigen.

In einigen Ausführungsformen der Erfindung kann die Druckreduktionseinrichtung regelbar sein, so dass der durchb den Heizkatalysator strömende Teilstrom auf einen vorgebbaren Sollwert geregelt werden kann.

In einigen Ausführungsformen der Erfindung kann die Druckreduktionseinrichtung ausgewählt sein aus einer Drosselklappe und/oder einem Mischer und/oder einer Turbine eines Turboladers. Im letztgenannten Fall kann der Einlass des Heizkatalysators auf der Einlassseite der Turbine des Turboladers liegen und der Auslass an der Auslassseite des Turboladers. Der durch die Turbine ohnehin erzeugte Druckverlust dient somit gleichzeitig dazu, die Durchströmung des Heizkatalysators zu ermöglichen.

In einigen Ausführungsformen der Erfindung kann am Einlass des Heizkatalysators ein Absperrventil vorhanden sein. Das Absperrventil kann ein Magnetventil sein bzw. ein Magnetventil enthalten oder durch einen Stellmotor bewegt werden. Auf diese Weise kann der volle Abgasstrom durch die Abgasleitung geführt werden, ohne dass ein Teilstrom durch den Heizkatalysator strömt, wenn der Heizkatalysator nicht benötigt wird. Auf diese Weise können Ablagerungen aus dem Abgasstrom im Heizkatalysator vermieden und die Lebensdauer erhöht werden.

In einigen Ausführungsformen der Erfindung kann das Gehäuse des Heizkatalysators vollständig innerhalb der Abgasleitung angeordnet sein. Dies ermöglicht eine kompakte und mechanisch robuste Bauweise, sodass die Betriebssicherheit erhöht sein kann. Hierzu kann in einigen Ausführungsformen der Erfindung der Querschnitt der Abgasleitung in einem Längsabschnitt vergrößert sein, in welchem der Heizkatalysator angeordnet ist.

Nachfolgend soll die Erfindung anhand von Ausführungsbeispielen und Figuren ohne Beschränkung des allgemeinen Erfindungsgedankens näher erläutert werden. Dabei zeigt:
Figur 1 eine Ansicht eines erfindungsgemäßen Heizkatalysators in einer ersten Ausführungsform.
Figur 2 zeigt den Querschnitt durch den Heizkatalysator gemäß der ersten Ausführungsform.
Figur 3 zeigt eine Explosionszeichnung eines Heizkatalysators gemäß der ersten Ausführungsform.
Figur 4 erläutert erfindungsgemäße Abgasreinigungsvorrichtungen anhand einer Brennkraftmaschine.
Figur 5 erläutert unterschiedliche Einbauvarianten des erfindungsgemäßen Heizkatalysators.
Figur 6 zeigt einen Längsschnitt eines erfindungsgemäßen Heizkatalysators in einer zweiten Ausführungsform.
Figur 7 zeigt einen Querschnitt eines erfindungsgemäßen Heizkatalysators in der zweiten Ausführungsform.
Figur 8 zeigt einen Längsschnitt eines erfindungsgemäßen Heizkatalysators in einer dritten Ausführungsform.
Figur 9 zeigt einen Querschnitt eines erfindungsgemäßen Heizkatalysators in der dritten Ausführungsform.
Figur 10 zeigt die dem Heizkatalysator zugeführten Massenströme und die Zusammensetzung des im Heizkatalysator erzeugten Reformats.
Figur 11 zeigt die Temperatur eines Oxidationskatalysators und eines Partikelfilters nach einem Kaltstart gegen die Zeit.
Figur 12 zeigt den gesamten Abgasmassenstrom, die dem Abgasnachbehandlungssystem zugeführte thermische Leistung und die daraus resultierende SCR-Temperatur gegen die Zeit.
Figur 13 die dem Abgasnachbehandlungssystem zugeführte thermische Leistung und die daraus resultierende SCR-Temperatur gegen die Zeit für die ersten 480 Sekunden eines WHTC-Messzyklus.
Figur 14 zeigt das Integral der Heizleistung für elektrische Heizeinrichtungen und den erfindungsgemäßen Heizkatalysator beim Aufheizen eines SCR-Katalysators im WHTC-Zyklus sowie die für die Aufheizung jeweils eingesetzte Kraftstoffmenge.
Figur 15 zeigt einen Prüfstand zum Test des erfindungsgemäßen Heizkatalysators.
Figur 16 zeigt den gesamten Abgasmassenstrom, den dem erfindungsgemäßen Heizkatalysator zugeführten Abgasmassenstrom und die darin enthaltene Sauerstoffkonzentration gegen die Zeit.
Figur 17 zeigt die vom Heizkatalysator abgegebene Leistung, die im zugeführten Abgasmassenstrom enthaltene Sauerstoffkonzentration und die Temperatur des Heizkatalysators gegen die Zeit.
Figur 18 zeigt die Temperatur des Heizkatalysators gegen die Zeit bei unterschiedlichem zugeführten Abgasmassenstrom und Sauerstoffkonzentration.
Figur 19 zeigt einen erfindungsgemäßen Heizkatalysator in einer vierten Ausführungsform.

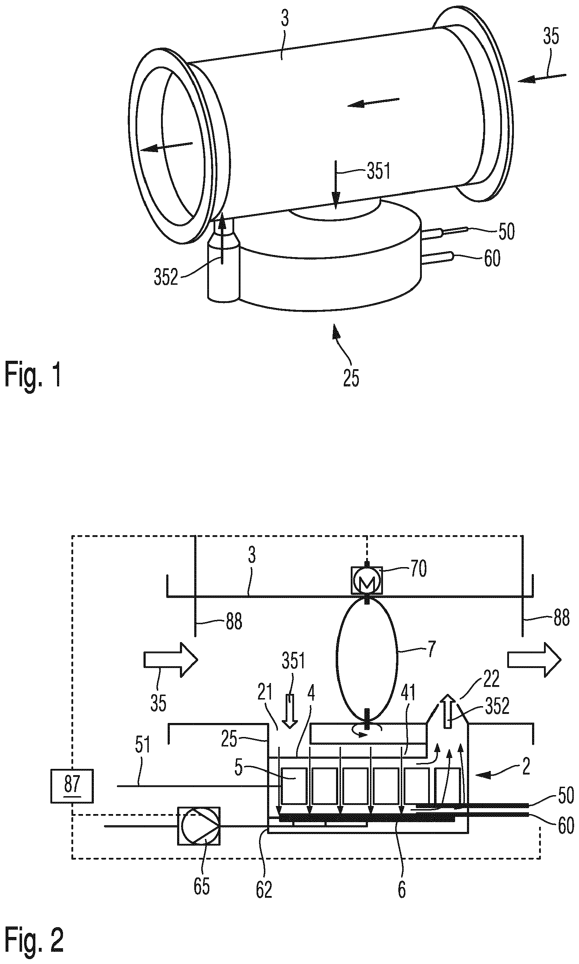

Anhand der Figuren 1, 2 und 3 wird eine erste Ausführungsform des erfindungsgemäßen Heizkatalysators erläutert. Dabei zeigen die Figuren 1 und 2 einen Teil einer Abgasleitung 3. Die Abgasleitung 3 ist dazu eingerichtet, einen Abgasstrom 35 aufzunehmen, welcher beispielsweise aus einer Brennkraftmaschine stammt.

Wie aus Figuren 1 und 2 weiter ersichtlich ist, wird der Abgasstrom 35 im Wesentlichen geradlinig durch die Abgasleitung 3 geleitet. Lediglich ein Teilstrom 351 wird über den Einlass 21 in das Gehäuse 25 des Heizkatalysators 2 geleitet. Der auf diese Weise abgezweigte Teilstrom 351 kann zwischen etwa 10 % und etwa 50 % oder zwischen etwa 15 % und etwa 30 % des gesamten in der Abgasleitung 3 strömenden Abgasstromes betragen.

Wie insbesondere Figur 2 zeigt, wird der durch den Einlass 21 eintretende Abgasstrom 351 über eine Lochplatte 4 dem Katalysatorträger 5 zugeführt. Die Lochplatte 4 kann eine Keramik, ein Metall oder eine Legierung enthalten oder daraus bestehen. Die Lochplatte 4 weist ferner eine Mehrzahl von Bohrungen 41 auf, durch welche das Abgas hindurchtreten kann. Anzahl, Größe und Verteilung der Bohrungen 41 können in einer Computersimulation so bestimmt werden, dass sich eine möglichst homogene Verteilung des Abgases im Katalysatorträger 5 ergibt.

Der Katalysatorträger 5 kann in an sich bekannter Weise beispielsweise einen Sinterkörper, einen Wabenkörper, einen Schaum oder ein anderer poröser Formkörper sein, welcher für Abgas durchlässig ist. Hierzu kann der Katalysatorträger 5 aus einem Metall, einer Legierung oder einer Keramik gefertigt sein. Der Katalysatorträger 5 kann mit einer elektrischen Heizeinrichtung versehen sein, sodass dieser mit einer Heizleistung zwischen etwa 500 W und etwa 1500 W erwärmt werden kann. Hierzu dient ein elektrischer Anschluss 51, durch welchen elektrische Heizenergie in den Katalysatorträger 5 eingebracht werden kann. Mittels eines Temperatursensors 50 kann die Temperatur des Katalysatorträgers 5 erfasst und gesteuert oder geregelt werden.

Schließlich befindet sich auf der der Lochplatte gegenüberliegenden Seite des Katalysatorträgers 5 eine Kraftstoffplatte 6. Die Kraftstoffplatte 6 kann ein Metall oder eine Legierung enthalten oder daraus bestehen und optional mit einer kapillaren Transporteinrichtung versehen sein. Als Transporteinrichtung können beispielsweise Kanäle in die Oberfläche der Kraftstoffplatte 6 eingebracht sein, welche einen kapillaren Transport des Kraftstoffes ermöglichen, sodass dieser sich möglichst homogen in einem dünnen Film auf der dem Katalysatorträger 5 zugewandten Oberfläche der Kraftstoffplatte 6 verteilt. Die Zufuhr des Kraftstoffes kann über eine Pumpe 65 gesteuert bzw. geregelt werden. In einigen Ausführungsformen der Erfindung wird der auf der Kraftstoffplatte 6 aufgebrachte Kraftstoff aus dem Haupttank der Brennkraftmaschine entnommen. Beispielsweise kann es sich um Otto- oder Dieselkraftstoff oder Erdgas oder LPG handeln. In anderen Ausführungsformen der Erfindung kann auf die Kraftstoffplatte 6 ein speziell für die Aufheizung des Abgasnachbehandlungssystems bereitgestellter Kraftstoff aufgebracht werden, beispielsweise ein Alkohol oder Testbenzin.

Durch das durch den Katalysatorträger 5 strömende Abgas wird durch Konvektion und Strahlung Wärme in die Kraftstoffplatte 6 eingebracht. Dies führt zum Verdampfen des Kraftstoffes. Der Kraftstoffdampf steigt sodann in den Katalysatorträger 5 auf und wird dort mit dem Abgas exotherm umgesetzt. Die hierdurch entstehende Wärme wird teilweise dem Abgas zugeführt, sodass der aus dem Auslass 22 in die Abgasleitung 3 strömende Abgasstrom 352 gegenüber dem eintretenden Abgasstrom 351 erwärmt ist. Darüber hinaus enthält der in die Abgasleitung 3 eingeleitete Abgasstrom 352 Bestandteile des am Katalysatorträger 5 umgesetzten Kraftstoffes, beispielsweise ein Reformat.

In einigen Ausführungsformen der Erfindung kann nach einem Kaltstart zunächst ein erster Betriebszustand gewählt werden, in welchem der Kraftstoff mit dem Abgas überwiegend oxidiert wird. Hierdurch wird primär durch exotherme Reaktion Wärme erzeugt, welche der Aufheizung des Abgasnachbehandlungssystems dient. In diesem ersten Betriebszustand kann der Katalysatorträger 5 optional zumindest zeitweise elektrisch beheizt werden. Die Luftzahl λ des Heizkatalysators kann zwischen etwa 0,7 und etwa 1, in einigen Ausführungsformen auch größer als 1 gewählt sein.

In einem zweiten Betriebszustand des Heizkatalysators kann der Kraftstoff überwiegend zu einem Reformat umgesetzt werden, welches ein Gemisch aus vorwiegend kurzkettigen Alkenen und/oder Kohlenmonoxid und/oder Wasserstoff enthält oder daraus besteht. Dieses Reformat wird nachfolgend an einem Partikelfilter und/oder einem Abgaskatalysator oxidiert, wobei die entstehende Wärme unmittelbar in diese Komponenten eingebracht wird. Hierzu wird der Heizkatalysator unterstöchiometrisch betrieben, d.h. die Luftzahl λ des Heizkatalysators liegt zwischen etwa 0,05 und etwa 0,7 oder zwischen etwa 0,1 und etwa 0,4.

Die Umschaltung zwischen dem ersten und dem zweiten Betriebszustand kann durch Anpassung der zugeführten Kraftstoffmenge und/oder durch Anpassung der Abgaszusammensetzung und/oder durch Zufuhr von Umgebungsluft erfolgen. Die Abgaszusammensetzung kann unter anderem durch Wahl der eingespritzten Kraftstoffmenge, des Ladedrucks, der Drosselklappenstellung, der Anzahl und Dauer der Einzeleinspritzungen, des Einspritz- oder Zündzeitpunktes, der Öffnungsdauer der Einlass- und Auslassventile, des Öffnungshubes und/oder der Stellung eines Abgasrückführungsventils beeinflusst werden. Bevorzugt aber nicht zwingend erfolgt die Umschaltung zwischen dem ersten und dem zweiten Betriebszustand durch Anpassung der zugeführten Kraftstoffmenge, welche dazu in Abhängigkeit der Abgaszusammensetzung gewählt wird. Die Abgaszusammensetzung kann zumindest teilweise gemessen werden, beispielsweise durch eine Lambdasonde. Alternativ oder zusätzlich kann die Abgaszusammensetzung aus den Kennfeldern der Brennkraftmaschine extrapoliert werden, so dass im Ergebnis die dem Heizkatalysator zugeführte Kraftstoffmenge aus den im jeweiligen Betriebszustand der Brennkraftmaschine anliegenden Kennfeldern bzw. Kennfeldbereichen bestimmt werden kann.

In einigen Ausführungsformen der Erfindung kann die Umschaltung zwischen dem ersten und dem zweiten Betriebszustand zyklisch erfolgen, so dass mehrfach zwischen Wärmeeintrag und Reformaterzeugung gewechselt wird.

In einigen Ausführungsformen der Erfindung kann eine Mehrzahl von Heizkatalysatoren vorhanden sein, so dass der erste und der zweite Betriebszustand auch gleichzeitig anliegen kann.

Zur Regelung der Fördermenge der Pumpe 65 kann in einigen Ausführungsformen der Erfindung die Temperatur der Kraftstoffplatte 6 herangezogen werden, welche mit einem optionalen Temperatursensor 60 erfasst wird.

Weiterhin zeigt Figur 2 eine Druckreduktionseinrichtung 7. Diese enthält im dargestellten Beispiel eine Drosselklappe, deren Anstellwinkel durch einen Stellmotor 70 beeinflusst werden kann. Somit kann nach dem Kaltstart die Druckreduktionseinrichtung geschlossen werden, sodass sich zwischen dem Einlass 21 und dem Auslass 22 ein hinreichend großer Druckunterschied einstellt, sodass ein Teilstrom 351 des Abgasstromes 35 durch das Gehäuse 25 des Heizkatalysators 2 strömt. Die Druckreduktionseinrichtung 7 kann weiterhin die Wirkung haben, dass sich stromabwärts der Druckreduktionseinrichtung turbulente Wirbelschleppen ausbilden, welche für eine effiziente Durchmischung des aus dem Gehäuse 25 des Heizkatalysators 2 austretenden Teilstromes 352 mit dem in der Abgasleitung 3 strömenden Hauptstrom sorgt. Ist die Abgastemperatur so hoch, dass eine zusätzliche Erwärmung der Abgasreinigungsvorrichtung nicht erforderlich ist, kann die Drosselklappe 7 vollständig geöffnet sein. Dadurch liegt am Einlass 21 und am Auslass 22 näherungsweise derselbe Abgasdruck an, so dass das Abgas nicht oder nur zu geringen Teilen durch den Heizkatalysator 2 strömt. Die erfindungsgemäße Vorrichtung weist dann keinen wesentlich höheren Abgasgegendruck auf, als bekannte Abgasanlagen ohne Heizkatalysator, wodurch sich bei Volllast oder vollastnahen Betriebszuständen ein Leistungs- und/oder Verbrauchsvorteil ergeben kann.

Schließlich zeigt Figur 2 Temperatursensoren 88, welche die Abgastemperatur vor und nach der Druckreduktionseinrichtung 7 bestimmen. Hierdurch kann sichergestellt werden, dass kein zu heißes Abgas in den Katalysatorträger 5 eingeleitet wird, welches zur Zerstörung des Heizkatalysators 2 führen könnte. Weiterhin wird sichergestellt, dass im Heizkatalysator 2 nicht so viel Energie zugeführt wird, dass der Abgasstrom eine vorgebbare Maximaltemperatur überschreitet.

Die Druckreduktionseinrichtung 7, die Kraftstoffzufuhr über die Pumpe 65 und die elektrische Heizenergie des Katalysatorträgers 5 können über eine Steuer- oder Regeleinrichtung 87 kontrolliert werden, sodass der Heizkatalysator in Abhängigkeit des Betriebszustandes optimal gesteuert bzw. geregelt wird.

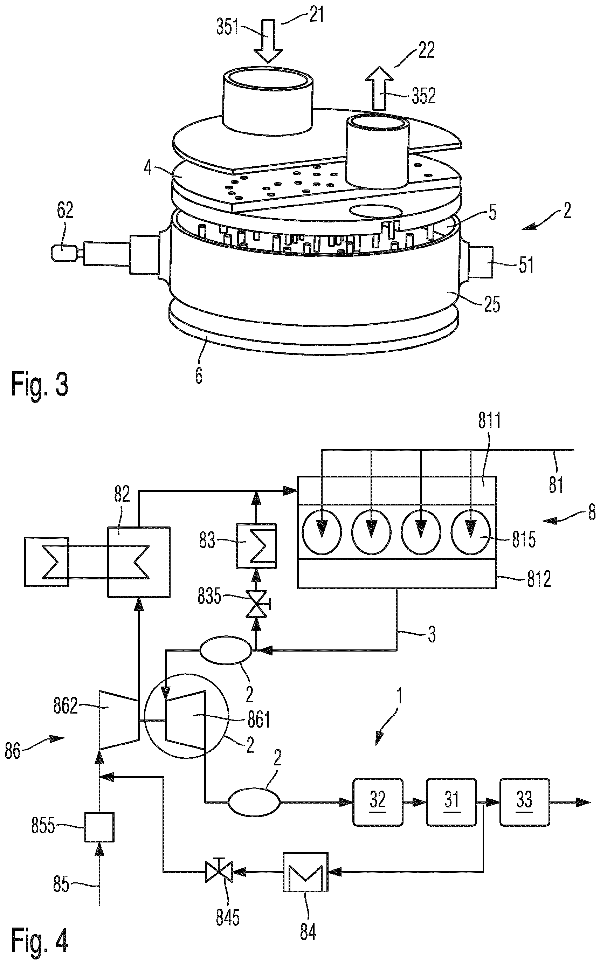

Figur 3 zeigt nochmals das Gehäuse 25 eines Heizkatalysators 2 in einer Explosionszeichnung. Erkennbar ist die Kraftstoffplatte 6 auf der Unterseite sowie die Lochplatte 4 auf der Oberseite des Katalysatorträgers 5. Über die Anschlüsse 62 und 51 kann elektrische Heizenergie und Kraftstoff zugeführt werden. An der Oberseite des etwa zylinderförmigen Gehäuses befinden sich der Einlass 21 und der Auslass 22, durch welche der Abgasstrom 351 in das Gehäuse 25 eintritt und der modifizierte Abgasstrom 352 aus dem Gehäuse des Heizkatalysators 2 austritt.

Der Heizkatalysator 2 weist eine kompakte Bauform und eine hohe Leistungsdichte zwischen etwa 30 kW/l und etwa 60 kW/l auf. Darüber hinaus kann die thermische Leistungsabgabe in einem weiten Bereich eingestellt werden, beispielsweise zwischen etwa 1 kW und etwa 18 kW, so dass der Modulationsbereich zwischen etwa 1:16 und etwa 1:20 beträgt.

Anhand der Figur 4 wird eine Brennkraftmaschine 8 mit deren externen Anbauteilen schematisch dargestellt. Die Brennkraftmaschine 8 weist im dargestellten Ausführungsbeispiel vier Zylinder 815 auf. Die Anzahl der Zylinder kann selbstverständlich in anderen Ausführungsformen der Erfindung größer oder auch geringer sein. Die Erfindung eignet sich für sämtliche üblichen Bauformen, beispielsweise Reihenmotoren, Boxermotoren oder V-Motoren. Der dargestellte 4-Zylinder-Reihenmotor ist somit lediglich beispielhaft zu verstehen. Weiterhin kann es sich um eine fremdgezündete Brennkraftmaschine oder eine selbstzündende Brennkraftmaschine handeln.

Der Brennkraftmaschine 8 wird Brennstoff über eine Leitung 81 zugeführt. Die Leitung 81 kann beispielsweise Teil eines Common-Rail-Systems sein oder jede andere, an sich bekannte Gemischaufbereitung. Weiterhin weist die Brennkraftmaschine 8 einen Ansaugtrakt 811 auf, über welche der Brennkraftmaschine 8 Frischluft zugeführt wird. Die Abgase werden über einen Abgaskrümmer 812 gesammelt und der Abgasleitung 3 zugeführt.

Weiterhin zeigt Figur 4 eine optionale Hochdruckabgasrückführung. Diese enthält ein Abgasrückführventil 835, welches die rückgeführte Abgasmenge steuert bzw. regelt sowie einen Abgaskühler 83, welcher dem rückgeführten Abgas Wärmeenergie entzieht und dadurch dessen Temperatur senkt. Die Hochdruckabgasrückführung leitet einen Teilstrom des Abgases aus der Abgasleitung 3 aus und führt diesen gekühlt wiederum dem Ansaugtrakt 811 zu.

Der Hauptstrom des Abgases wird von der Abgasleitung 3 über die Turbine 861 eines optionalen Turboladers 86 geleitet. Selbstverständlich kann der Turbolader 86 in anderen Ausführungsformen der Erfindung auch entfallen. Das Abgas wird in der Turbine 861 entspannt und treibt dabei über eine Welle einen Verdichter 862 an. Der Verdichter 862 verdichtet die über einen Einlass 85 angesaugte Frischluft, nachdem diese durch einen Luftfilter 855 geleitet und dort von Schmutzteilchen gereinigt wurde.

Die aus dem Verdichter 862 austretende, verdichtete Luft erreicht einen optionalen Ladeluftkühler 82, ehe die verdichtete und gekühlte Ansaugluft der Brennkraftmaschine 8 übe den Ansaugtrakt 811 zugeführt wird.

Das aus der Turbine 861 austretende Abgas erreicht ein im dargestellten Ausführungsbeispiel dreistufiges Abgasnachbehandlungssystem. Diese enthält einen Oxidationskatalysator 32, welcher unverbrannte Kraftstoffbestandteile und Kohlenmonoxid oxidiert, sodass im Wesentlichen CO₂ und H₂O aus dem Oxidationskatalysator 32 entweichen.

Das Abgas erreicht daraufhin einen Partikelfilter 31, welcher beispielsweise ein an sich bekannter Dieselpartikelfilter oder ein Ottopartikelfilter sein kann. Im Partikelfilter 31 werden Rußteilchen, welche durch unvollständige Verbrennung in den Zylindern 815 der Brennkraftmaschine 8 entstehen, zurückgehalten. Bei hinreichend großer Beladung des Partikelfilters 31 können die Rußteilchen zu CO₂ oxidiert werden. Dies erfordert Abgastemperaturen zwischen 350°C und 600°C.

Schließlich zeigt Figur 4 einen optionalen SCR-Katalysator 33, in welchem Stickoxide aus dem Abgasstrom mit Harnstoff reduziert werden. Die Umsetzung der Stickoxide erfordert Temperaturen über 200°C, bevorzugt über 250°C.

Schließlich zeigt Figur 4 eine ebenfalls optionale Niederdruckabgasrückführung, welche Abgas stromabwärts des Partikelfilters 31 abzweigt, die Temperatur über einen optionalen Abgaskühler 84 senkt und das gekühlte Abgas auf der Niederdruckseite des Verdichters 862 einspeist. Zur Kontrolle des rückgeführten Massenstroms steht ein weiteres Abgasrückführungsventil 845 zur Verfügung.

Es versteht sich von selbst, dass Figur 4 den Maximalausbau mit Peripheriegeräten zeigt. In anderen Ausführungsformen der Erfindung können einzelne Peripheriegeräte auch entfallen, beispielsweise muss nicht in jedem Fall ein Turbolader 86, ein Ladeluftkühler 82, eine Abgasrückführung 83 und 84 oder eine mehrstufige Abgasreinigung 31, 32 und 33 zur Verfügung stehen. Es können einzelne Elemente auch entfallen.

Der Erfindung liegt nunmehr die Aufgabe zugrunde, den Oxidationskatalysator 32 und/oder den Partikelfilter 31 und/oder den SCR-Katalysator 33 auch im Teillastbetrieb und/oder nach einem Kaltstart rasch auf die erforderliche Betriebstemperatur zu bringen. Hierzu kann an den mit Bezugsziffer 2 bezeichneten Stellen der erfindungsgemäße Heizkatalysator eingesetzt werden. Der Heizkatalysator kann somit entweder vor oder nach der Turbine 861 des Turboladers 86 in die Abgasleitung 3 eingesetzt sein. In anderen Ausführungsformen der Erfindung der Heizkatalysator 2 vor oder hinter dem Turbolader 86 in die Abgasleitung 3 integriert werden.

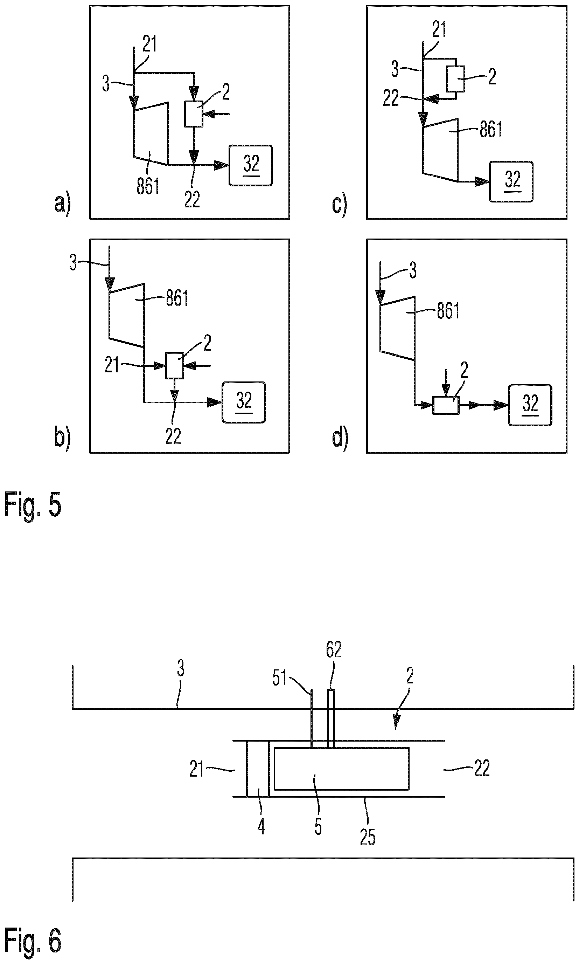

Anhand von Figur 5 werden verschiedene Einbausituationen des Heizkatalysators 2 näher erläutert. Der Aufbau des Heizkatalysators orientiert sich dabei im Wesentlichen an den anhand der Figuren 1, 2 und 3 bzw. der Figur 6 und 7 oder der Figur 8 und 9 gezeigten drei verschiedenen Ausführungsformen der Erfindung.

Figur 5a zeigt den Einbau eines Heizkatalysators 2 parallel zur Turbine 861 des Turboladers 86. In diesem Fall sorgt der in der Turbine 861 auftretende Druckverlust dafür, dass am Einlass 21 des Heizkatalysators 2 ein höherer Abgasdruck anliegt als am Auslass 22. Hierdurch wird ein Teilstrom 351 des Abgases durch den Heizkatalysator 2 gefördert. Die Turbulenz des Abgases nach Verlassen der Turbine 861 sorgt darüber hinaus für eine ausreichend gute Vermischung des im Heizkatalysator 2 erzeugten Kraftstoffdampfes bzw. Reformats mit dem durch die Turbine 861 strömenden Hauptstrom des Abgases.

Figur 5b zeigt eine Einbauvariante des Heizkatalysators 2 auf der Niederdruckseite des Abgasstromes, d.h. nach Verlassen der Turbine 861 des Turboladers 86. Hierzu eignet sich beispielsweise die in Figur 2 im Schnitt dargestellte Ausführungsform der Erfindung unter Einsatz eines Mischers. Vorteilhaft ist die universelle Verwendbarkeit des Heizkatalysators für eine Vielzahl von Fahrzeugtypen.

Figur 5c zeigt den Einbau eines Heizkatalysators 2 auf die Hochdruckseite des Abgasstrangs, d. h. vor der Turbine 861 des Turboladers 86. Dies hat den Vorteil, dass die Turbine des Turboladers 861 für eine gute Durchmischung des Hauptstromes mit dem aus dem Heizkatalysator 2 austretenden Teilstrom, welcher Kraftstoffdampf enthält, ermöglicht.

Schließlich zeigt Figur 5d die Einbindung des Heizkatalysators 2 in die Abgasleitung unmittelbar vor dem aufzuheizenden Abgasnachbehandlungssystem. Hierzu eignet sich insbesondere die anhand der Figuren 6 bis 9 gezeigte Ausführungsform, bei welcher der Heizkatalysator 2 vollständig im Inneren der Abgasleitung 3 angeordnet ist und somit vor Beschädigung geschützt auch am Fahrzeugboden angeordnet werden kann.

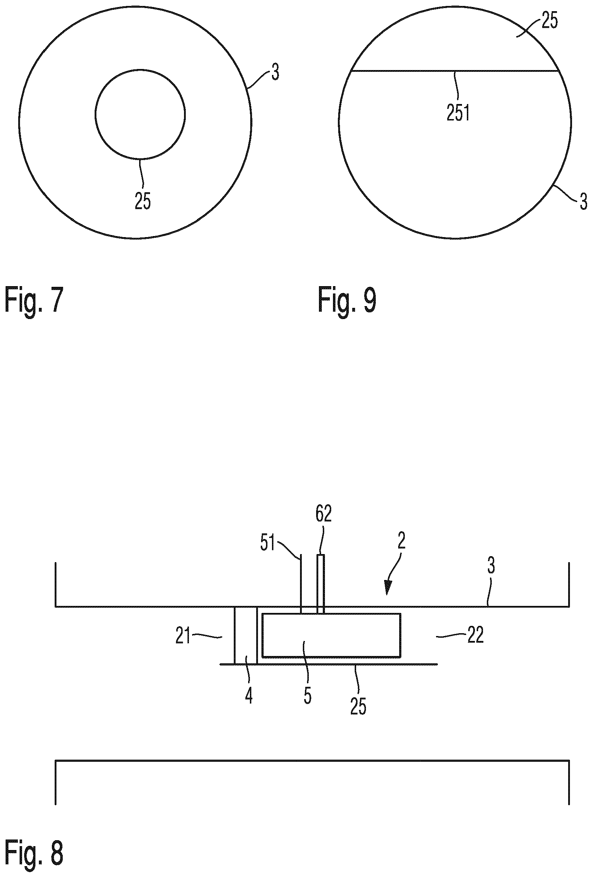

Anhand der Figuren 6 und 7 wird eine zweite Ausführungsform des erfindungsgemäßen Heizkatalysators gezeigt. Gleiche Bestandteile der Erfindung sind mit gleichen Bezugszeichen versehen, so dass sich die Beschreibung auf die wesentlichen Unterschiede beschränkt. Dabei zeigt Figur 6 einen Längsschnitt und Figur 7 den Querschnitt.

Wie aus den Figuren ersichtlich ist, ist der Heizkatalysator 2 wiederum in einem in etwa zylindrischen Gehäuse angeordnet. Das Gehäuse ist in etwa konzentrisch zur Abgasleitung 3 angeordnet. Für diesen Zweck kann die Abgasleitung 3 im Bereich des Heizkatalysators 2 einen größeren Durchmesser aufweisen als in anderen Längsabschnitten der Abgasleitung 3. Der Einlass 21 und der Auslass 22 des Gehäuses 25 sind an gegenüberliegenden Enden des zylindrischen Gehäuses 25 angeordnet. Das Abgas strömt somit durch die Vorderseite in das Gehäuse 25 ein und durch dessen Rückseite wieder aus. Das Gehäuse 25 wird somit stets vom Abgas durchströmt, wenn die Brennkraftmaschine in Betrieb ist. Aufgrund der weitgehend homogenen Anströmung mit Abgas kann in diesen Ausführungsformen die Lochplatte 4 auch entfallen. So wie in den Figuren 6 und 7 beispielhaft für ein Abgasrohr gezeigt, kann der Heizkatalysator auch in das Gehäuse eines Abgaskatalysators oder eines Partikelfilters integriert werden.

Anhand der Figuren 8 und 9 wird eine dritte Ausführungsform der Erfindung näher erläutert. Gleiche Bestandteile der Erfindung sind mit gleichen Bezugszeichen versehen, so dass sich die Beschreibung auf die wesentlichen Unterschiede beschränkt. Wiederum ist in Figur 8 der Längsschnitt dargestellt und in Figur 9 der Querschnitt.

Wie ersichtlich ist, befindet sich das Gehäuse des Heizkatalysators 2 nicht in etwa konzentrisch in der Mitte der Abgasleitung 3, sondern an dessen Rand und ist dort mit einer ebenen oder gekrümmten Trennwand 251 vom verbleibenden freien Querschnitt der Abgasleitung 3 abgeteilt. Diese Ausführungsform hat den Vorteil, dass die Anschlusskontakte 51 einer elektrischen Heizeinrichtung und die Kraftstoffzufuhr 62 nicht durch die heiße Abgaszone geführt werden müssen. Auch in diesem Fall kann eine Lochplatte 4 unter Umständen entfallen, da der Katalysatorträger 5 ohnehin bereits homogen angeströmt wird. So wie in den Figuren 8 und 9 beispielhaft für ein Abgasrohr gezeigt, kann der Heizkatalysator auch in das Gehäuse eines Abgaskatalysators oder eines Partikelfilters integriert werden.

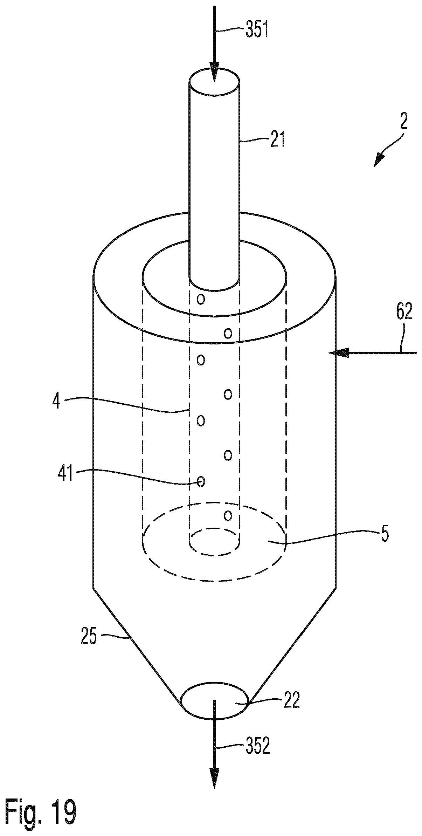

Die Figur 19 zeigt einen erfindungsgemäßen Heizkatalysator in einer vierten Ausführungsform. Gleiche Bestandteile der Erfindung sind mit gleichen Bezugszeichen versehen, so dass sich die Beschreibung auf die wesentlichen Unterschiede beschränkt.

Wie aus Figur 19 ersichtlich ist, weist der Heizkatalysator ein in etwa zylindrisches Gehäuse 25 auf, wobei der Einlass 21 und der Auslass 22 axial angeordnet sind. Wie Figur 19 weiter zeigt, wird der durch den Einlass 21 eintretende Abgasstrom 351 über eine Lochplatte 4 in Form einer Zylindermantelfläche dem Katalysatorträger 5 zugeführt. Die Lochplatte 4 kann eine Keramik, ein Metall oder eine Legierung enthalten oder daraus bestehen. In einigen Ausführungsformen der Erfindung kann die Lochplatte 4 durch einen Längsabschnitt des den Einlass 21 bildenden Rohres gebildet werden. Die Lochplatte 4 weist ferner eine Mehrzahl von Bohrungen bzw. Öffnungen 41 auf, durch welche das Abgas hindurchtreten kann. Anzahl, Größe und Verteilung der Bohrungen 41 können in einer optionalen Computersimulation so bestimmt werden, so dass sich eine möglichst homogene Verteilung des Abgases im Katalysatorträger 5 ergibt. In einigen Ausführungsformen der Erfindung kann das Ende des den Einlass 21 bildenden Rohres verschlossen sein, so dass das Abgas nur durch die Öffnungen 41 austritt.

Der Katalysatorträger 5 kann in an sich bekannter Weise beispielsweise ein Sinterkörper, ein Wabenkörper, ein Schaum oder ein anderer poröser Formkörper sein, welcher für Abgas durchlässig ist. Hierzu kann der Katalysatorträger 5 aus einem Metall, einer Legierung oder einer Keramik gefertigt sein. Der Katalysatorträger 5 weist ebenfalls die Form einer Zylindermantelfläche auf und ist in etwa konzentrisch um die zylinderförmige Lochplatte 4 und/oder in etwa konzentrisch zum Gehäuse 25 angeordnet.

Schließlich befindet sich auf der der Lochplatte gegen-überliegenden Seite des Katalysatorträgers 5 eine ebenfalls konzentrische Kraftstoffplatte, auf welche über eine Kraftstoffzufuhr 62 Kraftstoff aufgebracht wird.

In einigen Ausführungsformen der Erfindung kann eine Kraftstoffplatte auch entfallen, wenn der Kraftstoff unmittelbar auf den Katalysatorträger 5 aufgebracht wird. Bei unmittelbarem Auftreffen von Kraftstoff auf den Katalysatorträger 5 kann der Kraftstoff gasförmig eingebracht werden. Ein flüssiger Kraftsstoff kann dazu über einen nicht dargestellten Verdampfer in den Heizkatalysator eingebracht werden. Dies vermeidet oder reduziert eine unerwünschte Abkühlung des Katalysatorträgers 5 durch die Verdampfungsenthalpie des Kraftstoffes.

In einigen Ausführungsformen kann die Kraftstoffzufuhr 62 mehrfach vorhanden sein, so dass Kraftstoff an mehreren Stellen entlang des Umfangs und/oder entlang der Längserstreckung eingebracht werden kann. Die lediglich schematische Darstellung von nur einer Kraftstoffzufuhr 62 ist lediglich als erläuternd zu verstehen.

Die nachfolgenden Vergleichsbeispiele erläutern die Erfindung, wobei sie nicht so verstanden werden sollen, dass sie die Erfindung darauf einschränken. In den nachfolgenden Beispielen wird eine Abgasreinigungsvorrichtung eingesetzt, wie sie in den Figur 1 bis 4 beschreiben ist.

Wie vorstehend bereits beschrieben wurde, kann der erfindungsgemäße Heizkatalysator einen ersten Betriebszustand aufweisen, in welchem Kraftstoff mit vergleichsweise langkettigen Kohlenwasserstoffen im Heizkatalysator umgesetzt wird. Das hierbei entstehende Reformat kann bereits bei niedrigeren Temperaturen auf einer Komponente eines Abgasnachbehandlungssystems, beispielsweise einem Oxidationskatalysator, umgesetzt werden und so unmittelbar im Abgasstrang bzw. dem Abgasnachbehandlungssystem Wärme erzeugen. Darüber hinaus kann der erfindungsgemäße Heizkatalysator in einem zweiten Betriebszustand betrieben werden, in welchem der Kraftstoff weitgehend oder vollständig oxidiert wird, um durch exotherme Reaktion Wärme in das Abgas einzutragen.

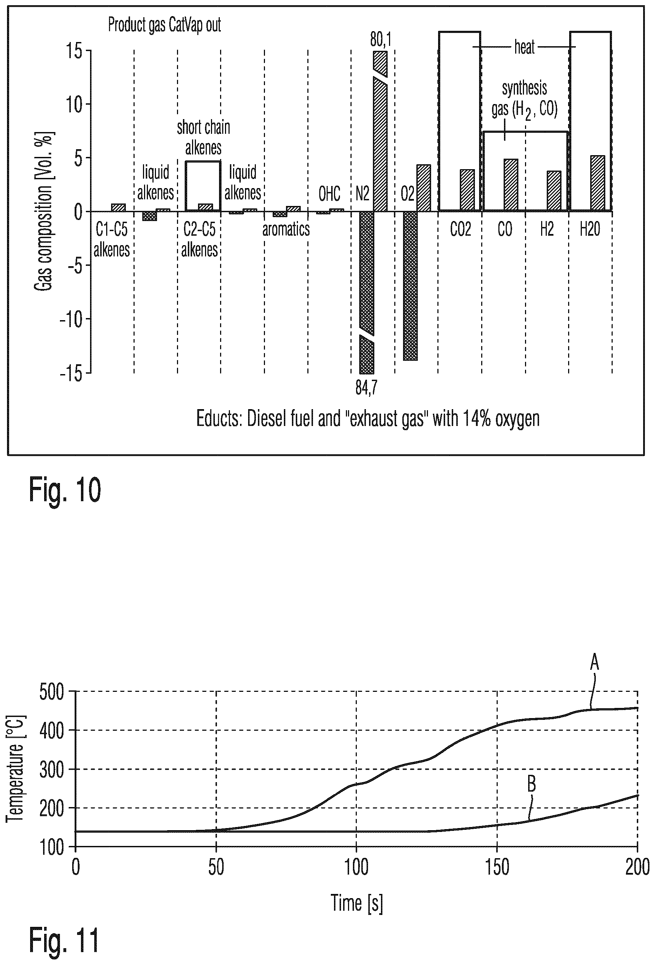

Figur 10 zeigt auf der positiven Ordinate die Zusammensetzung des im ersten Betriebszustand durch den Heizkatalysator erzeugten Reformats. Auf der negativen Ordinate ist die Zusammensetzung der dem Heizkatalysator zugeführten Massenströme dargestellt.

Figur 10 zeigt die Ergebnisse eines Testbetriebes, bei welchem der Abgasstrom durch ein Gemisch aus 14 % Sauerstoff und 84,7 % Stickstoff simuliert wird. Dieser simulierte Abgasstrom wird dem Heizkatalysator in der vorstehend beschriebenen Weise zugeführt. Darüber hinaus wird dem Heizkatalysator handelsüblicher Dieselkraftstoff zugeführt, welcher im Wesentlichen aus einer Mischung aus Alkanen, Alkenen, Aromaten und oxygenierten Kohlenwasserstoffen besteht. Bei Raumtemperatur bestehen die Alkane aus gasförmigen Bestandteilen, welche etwa 1 bis 5 Kohlenstoffatome aufweisen, und flüssigen Alkanen mit mehr als 6 Kohlenstoffatomen.

Innerhalb des Heizkatalysators wird der Dieselkraftstoff mit dem Abgas umgesetzt. Hierdurch entsteht Wärme und Oxidationsprodukte wie Wasserstoff und Kohlenmonoxid. Darüber hinaus wird der Kraftstoff in kurzkettige Alkene gecrackt, wie beispielsweise Propan und Ethylen. Das so erzeugte Reformat enthält nahezu keine bei Raumtemperatur kondensierbaren flüssigen Alkane mehr. Dies führt dazu, dass die Zündtemperatur auf einem Oxidationskatalysator eines Abgasnachbehandlungssystems reduziert ist. Somit kann unmittelbar im Abgasnachbehandlungssystem durch Oxidation des Reformats Wärme erzeugt werden, welche die nachfolgenden Komponenten des Abgasnachbehandlungssystems aufheizt, beispielsweise einen Partikelfilter. Die so erzeigte Heizleistung kann größer sein als etwa 10 kW oder größer als etwa 15 kW oder größer als etwa 20 kW oder größer als etwa 25 kW oder größer als etwa 30 kW.

Figur 11 zeigt die Temperatur eines Partikelfilters 31 im Kurve B und die Temperatur eines Oxidationskatalysators 32 in Kurve A eines Abgasnachbehandlungssystems eines Pkws mit Dieselmotor. Der Abgasstrom wurde auf 50 kg/h und eine konstante Temperatur von 140°C eingestellt. Figur 11 zeigt den Temperaturverlauf gegen die Zeit. Nach etwa 40 Sekunden wurde das anhand der Figur 10 vorstehend beschriebene Reformat in den Abgasstrang eingeleitet. Daraufhin steigt die Temperatur des Oxidationskatalysators innerhalb von etwa 35 Sekunden auf einen Wert von über 200°C an. Im Verlauf von weiteren zwei Minuten erwärmt sich der Oxidationskatalysator weiter auf Temperaturen von etwa 450°C.

Vom Oxidationskatalysator 32 wird Wärme in den stromabwärts gelegenen Partikelfilter 31 abgegeben. Wie Figur 11 zeigt, erreicht der Partikelfilter etwa 3 Minuten nach dem Kaltstart und etwa 140 Sekunden nach der Zugabe des Reformats bereits eine Temperatur von mehr als 200°C. Die Heizleistung, welche auf diese Weise durch den erfindungsgemäßen Heizkatalysator erzeugt wird, beträgt etwa 6 kW.

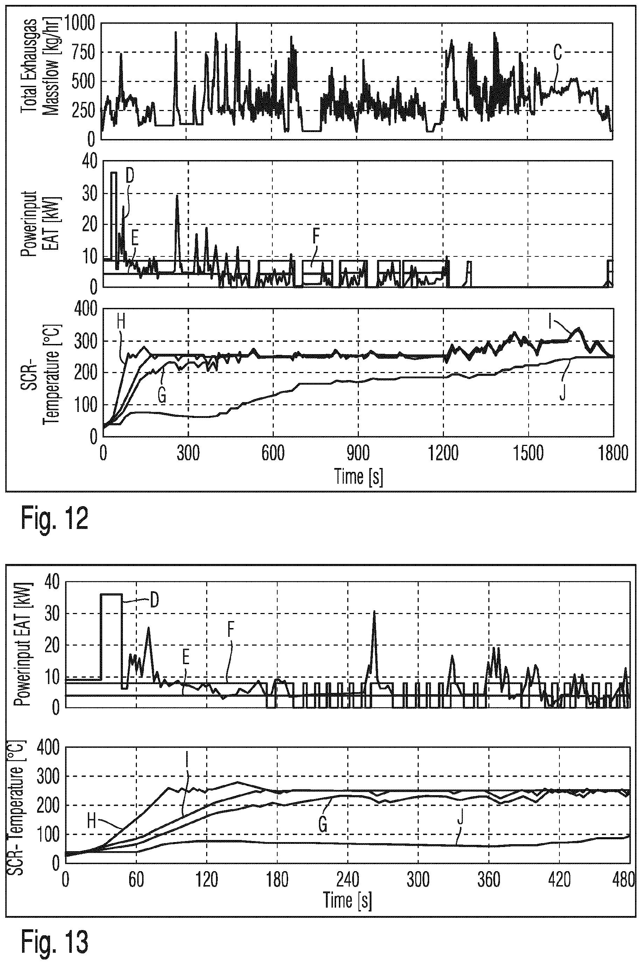

Figur 12 zeigt in Kurve 10 den Abgasmassenfluss. Im mittleren Bildteil wird die dem Abgasnachbehandlungssystem zugeführte Heizleistung dargestellt. Dabei bezeichnet Kurve D die vom erfindungsgemäßen Heizkatalysator bereitgestellte Heizleistung. Als Vergleichsbeispiel wird die Heizleistung einer elektrischen Heizung mit 4 kW in Kurve E sowie einer elektrischen Heizung mit 8 kW in Kurve F dargestellt. Schließlich zeigt Figur 12 die Temperatur eines SCR-Katalysators gegen die Zeit. Kurve H zeigt den Temperaturverlauf bei Beheizung mit einem erfindungsgemäßen Heizkatalysator, Kurve G zeigt den Temperaturverlauf bei einer elektrischen Beheizung mit 4 kW, Kurve I zeigt den Temperaturverlauf bei einer elektrischen Beheizung mit 8 kW und Kurve J zeigt den Temperaturverlauf ohne weitere Heizmaßnahmen. Dargestellt ist jeweils der zeitliche Verlauf in den ersten 30 Minuten nach dem Kaltstart während eines WHTC-Testzyklus. Figur 13 zeigt eine vergrößerte Ansicht der ersten 480 Sekunden des in Figur 12 dargestellten Testzyklus.

Wie aus Kurve D ersichtlich ist, stellt der erfindungsgemäße Heizkatalysator im zweiten Betriebszustand vom Start weg eine Heizleistung von etwa 9 kW zur Verfügung. Nach einigen zehn Sekunden ist der Oxidationskatalysator des Abgasnachbehandlungssystems so weit erwärmt, dass der Heizkatalysator in den ersten Betriebszustand umschalten kann. Im ersten Betriebszustand wird eine Heizleistung von etwa 36 kW abgegeben. Die Heizleistung wird sodann innerhalb der nächsten zwei Minuten reduziert. Hierbei ergeben sich bisweilen Schwankungen aufgrund des schwankenden Abgasmassenstroms, welcher dem Heizkatalysator zugeführt wird.

Wie aus Figur H ersichtlich ist, führt die hohe Heizleistung des erfindungsgemäßen Heizkatalysators dazu, dass bereits nach 70 Sekunden eine Temperatur von mehr als 200°C am SCR-Katalysator erreicht wird, welche eine effiziente Reinigung von Stickoxiden im Abgas ermöglicht.

Im Vergleich dazu wird dieselbe Temperatur bzw. Reinigungswirkung bei einer elektrischen Heizleistung von 8 kW erst nach mehr als zwei Minuten erreicht. Reduziert man die elektrische Heizleistung weiter auf 4 kW, was bereits die Grenze eines 12-Volt-Bordnetzes darstellt, so erreicht der SCR-Katalysator eine Temperatur von 200° erst nach 180 Sekunden. Eine Temperatur von 250° wird erst nach 420 Sekunden erreicht. Demgegenüber ermöglicht der erfindungsgemäße Heizkatalysator bereits nach etwa 80 Sekunden eine Temperatur von mehr als 250°C am SCR-Katalysator. Im Vergleich zur elektrischen Heizung mit 4 kW setzt die volle Funktion des SCR-Katalysators somit bei Einsatz des erfindungsgemäßen Heizkatalysators bereits mehr als fünf Minuten früher ein.

Wie Figur 12 in Kurve J weiter zeigt, erreicht ein SCR-Katalysator bei Verzicht auf jedwede Heizvorrichtung erst nach 30-minütiger Fahrt seine volle Betriebstemperatur von 250°C. Mit anderen Worten, ist eine Stickoxidreduktion im Abgas während der ersten 30 Minuten Fahrstrecke und damit im Kurzstreckenbetrieb überhaupt nicht möglich.

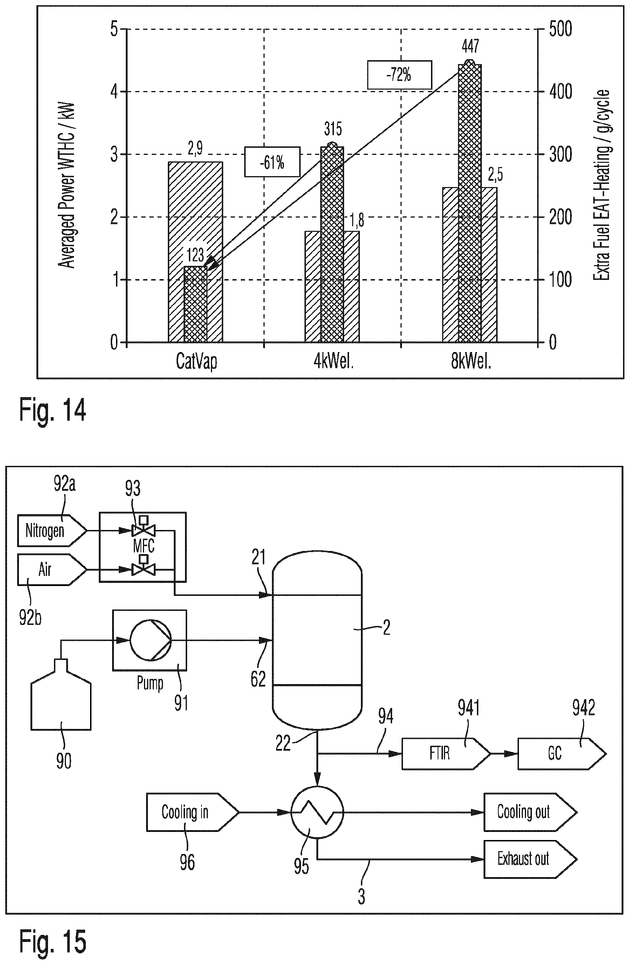

Figur 14 zeigt die integrierte Heizleistung der drei in Figuren 12 und 13 miteinander verglichenen Heizvorrichtungen über den gesamten WHTC-Testzyklus. Der erfindungsgemäße Heizkatalysator wurde dabei so betrieben, dass der SCR-Katalysator schnellstmöglich auf Betriebstemperatur aufgeheizt wurde. Die schnellstmögliche Aufheizung ergibt sich dabei bei einer Betriebsführung, welche den Heizkatalysator im zweiten Betriebszustand betreibt, bis ein vor dem SCR-Katalysator angeordneter Oxidationskatalysator eine Temperatur von etwa 160°C erreicht hat und nachfolgendes Umschalten in den ersten Betriebszustand, wie in Figur 13 anhand der Kurve D erläutert.

Wie in Figur 14 ersichtlich ist, erzeugt der erfindungsgemäße Heizkatalysator dabei eine mittlere Heizleistung von 2,9 kW über den gesamten WHTC-Testzyklus. Hierfür wird eine zusätzliche Kraftstoffmenge von 123 g eingesetzt.

Im Vergleich dazu benötigt eine elektrische Heizeinrichtung mit nominell 4 kW Leistung für den Betrieb eine Kraftstoffmenge von 315 g während des WHTC-Testzyklus, um damit eine mittlere thermische Leistung von 1,8 kW bereitzustellen. Verdoppelt man die elektrische Heizleistung auf nominell 8 kW, so wird während des gesamten WHTC-Testzyklus eine mittlere elektrische Heizleistung von 2,5 kW erzeugt, wofür jedoch eine Kraftstoffmenge von 447 g aufgewendet werden muss. Die für die Aufheizung des Abgasnachbehandlungssystems erforderliche Kraftstoffmenge wird bei Einsatz des erfindungsgemäßen Heizkatalysators gegenüber einer elektrischen Heizung somit um über 70 % oder über 60 % reduziert, obgleich die freigesetzte Heizleistung erheblich größer ist. Dies ist darauf zurückzuführen, dass die elektrische Heizleistung im Kraftfahrzeug durch die Antriebsmaschine und den Generator bereitgestellt werden muss, welche einen vergleichsweisen niedrigen Wirkungsgrad aufweisen.

So wie vorstehend für einen SCR-Katalysator beschrieben, kann der erfindungsgemäße Heizkatalysator auch dazu eingesetzt werden, in sämtlichen Betriebszuständen, insbesondere auch in Betriebszuständen mit niedriger Last, die für die Regenerierung eines Partikelfilters notwendige Heizleistung bereitzustellen.

Anhand der Figur 15 wird ein Prüfstand näher erläutert, mit welchem der erfindungsgemäße Heizkatalysator 2 unter hochdynamischen Betriebsbedingungen getestet werden kann, wie diese im Realbetrieb in einem Kraftfahrzeug auftreten.

Gleiche Bestandteile der Erfindung sind mit gleichen Bezugszeichen versehen, sodass sich die nachfolgende Beschreibung auf die wesentlichen Unterschiede beschränken kann.

Das Abgas einer Brennkraftmaschine enthält einerseits Verbrennungsgase wie beispielsweise H₂O und CO₂, welche näherungsweise als Inertgas angesehen werden können. Im simulierten, synthetischen Abgas wird dieser Teil aus Stickstoff gebildet. Daneben enthält der Abgasstrom einen wechselnden Anteil Sauerstoff, welcher zur Oxidation im Abgasstrang zur Verfügung steht. Um im Testbetrieb einen Abgasstrom zu simulieren, weist der Prüfstand einen Vorratsbehälter 92a auf, welcher Stickstoff enthält, sowie einen Vorratsbehälter 92b, welcher Luft enthält. Beide Bestandteile können über Massenflusskontrolle 93 dosiert werden, sodass am Einlass 21 des Heizkatalysators 2 ein Gasstrom mit wechselndem Sauerstoffgehalt zwischen 0% und 21% als synthetisches Abgas zur Verfügung steht.

Dieser Gasstrom durchströmt den Heizkatalysator 2 und verlässt den Heizkatalysator 2 über den Auslass 22. Weiterhin wird dem Heizkatalysator 2 über den Anschluss 62 handelsüblicher Dieselkraftstoff zugeführt, welcher aus einem Tank 90 mittels einer Dosierpumpe 91 gefördert wird.

Der am Auslass 22 austretende Gasstrom enthält je nach Betriebszustand des Heizkatalysators 2 im Wesentlichen einen heißen Inertgasstrom oder ein Reformat, wie vorstehend beschrieben.

Zur Analyse des Reformats wird ein Teilstrom des Abgases über die Leitung 94 einer Analyseeinrichtung zugeführt, welche im dargestellten Ausführungsbeispiel ein Fourier-Transformations-Infrarotspektrometer 941 sowie einen Gaschromatographen 942 enthält. Der verbleibende Abgasstrom wird über einen Abgaskühler 95 gekühlt und über eine Abgasleitung 3 abgeführt. Die Wärme des Abgases wird dabei zumindest teilweise an einen Kühlmittelstrom 96 abgegeben, welcher beispielsweise einen kühlenden Gasstrom und/oder eine Flüssigkeitskühlung umfassen kann. Durch Messung der Temperaturen und der Massenflüsse des Abgasstromes und des Kühlmittelstromes kann die vom Heizkatalysator 2 abgegebene Heizleistung bestimmt werden.

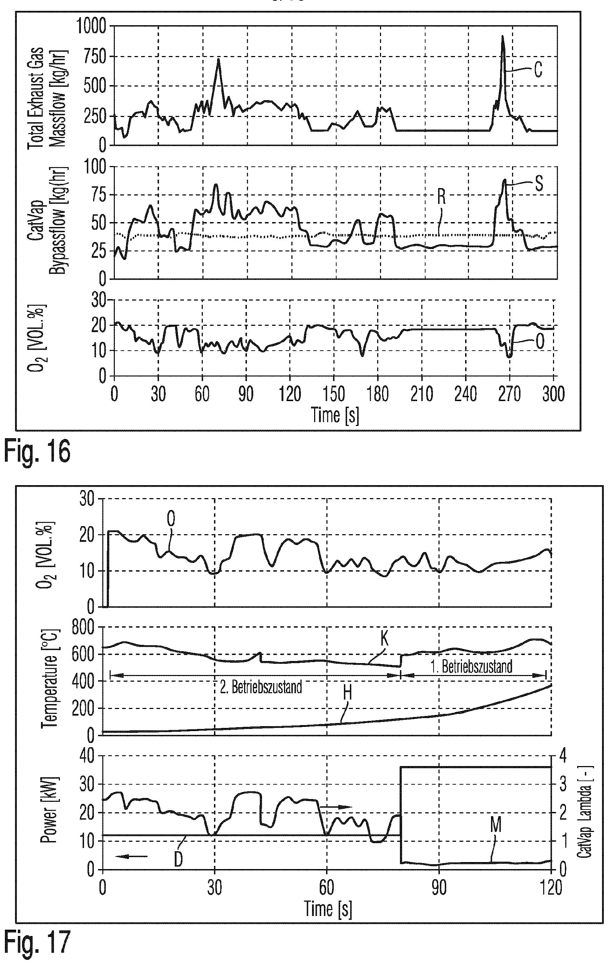

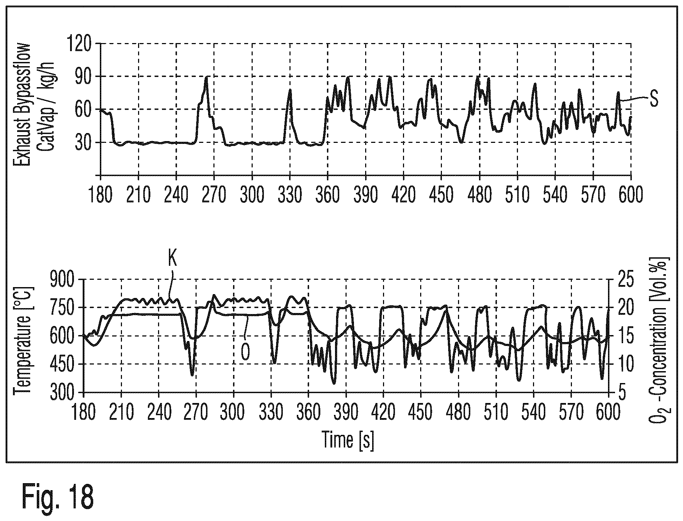

Anhand der Figuren 16, 17 und 18 werden experimentelle Ergebnisse der Charakterisierung eines Heizkatalysators gemäß der vorliegenden Erfindung dargestellt. Gezeigt ist der gesamte Abgasmassenstrom in Kurve C, der dem Heizkatalysator mit einer ungeregelten Druckreduktionseinrichtung 7 zugeführte Teilstrom in Kurve S, der dem Heizkatalysator mit einer geregelten Druckreduktionseinrichtung 7 zugeführte Teilstrom in Kurve R, der Sauerstoffgehalt des Abgases in Kurve O, die Temperatur eines SCR-Katalysator in Kurve H, die Temperatur des Heizkatalysators in Kurve K, die Luftzahl λ des Heizkatalysators in Kurve M sowie die vom Heizkatalysator abgegebene Heizleistung in Kurve D. Dabei zeigt Figur 16 den Verlauf dieser Größen über 300 Sekunden. Figur 17 zeigt eine vergrößerte Ansicht der ersten zwei Minuten. Figur 18 zeigt den Verlauf während der dritten bis zur zehnten Minute.

Wie aus Figur 16 und insbesondere Figur 17 ersichtlich ist, wird der Heizkatalysator während der ersten 80 Sekunden im zweiten Betriebszustand betrieben. Der zweite Betriebszustand zeichnet sich durch einen großen Luftüberschuss aus, sodass der zugeführte Kraftstoff vollständig oxidiert und exotherm umgesetzt wird. Wie Kurve D zeigt, beträgt die Heizleistung in diesem Fall etwa 12 kW. Der zugeführte Teilstrom des Abgases beträgt etwa 40 kg/h.

Nach 80 Sekunden wird der zugeführte Abgasmassenstrom auf etwa 14 kg/h reduziert. Der Heizkatalysator befindet sich sodann im ersten Betriebszustand, in welchem eine geringere thermische Leistung unmittelbar im Heizkatalysator erzeugt wird. Das in diesem Betriebszustand im Heizkatalysator erzeugte Reformat führt jedoch bei Umsetzung an einem Oxidationskatalysator des Abgasnachbehandlungssystems dazu, dass die einem Abgasnachbehandlungssystem effektiv zugeführte Wärmemenge auf 36 kW steigt. Nach etwa 110 Sekunden hat der SCR-Katalysator seine Betriebstemperatur erreicht, sodass eine effiziente Abgasreinigung von Stickoxiden ermöglicht wird.

Wie Kurve K in Figur 17 zeigt, reagiert die Austrittstemperatur am Ausgang 22 des Heizkatalysators 2 sehr rasch auf die Umschaltung des Betriebszustandes. Darüber hinaus zeigen die Figuren 16, 17 und 18, dass der erfindungsgemäße Heizkatalysator sehr robust gegen Schwankungen des Abgasmassenstroms und gegen Schwankungen der Sauerstoffkonzentration ist. Bei einem zugeführten Massenstrom S zwischen etwa 30 kg/h und etwa 90 kg/h und Schwankungen der Sauerstoffkonzentration zwischen 7 % und 20,5 % ergeben sich keine nachteiligen Auswirkungen auf die dem Abgasnachbehandlungssystem zugeführte Heizleistung.

Die vorstehend beschriebenen Anwendungsbeispiele belegen, dass der erfindungsgemäße Heizkatalysator kurzfristig hohe Heizleistungen zur Verfügung stellen kann, mit welchen ein Abgasnachbehandlungssystem innerhalb kürzester Zeiten von beispielsweise weniger als 120 Sekunden oder weniger als 100 Sekunden oder weniger als 80 Sekunden auf Betriebstemperatur gebracht werden kann. Im Vergleich zu elektrischen Heizeinrichtungen ist der Kraftstoffbedarf zur Aufheizung der Abgasnachbehandlungssysteme reduziert.

## Patentansprüche

1. Abgasreinigungsvorrichtung (1) mit zumindest einer Abgasleitung (3) und mit zumindest einem mit der Abgasleitung (3) verbundenen Partikelfilter (31) und/oder zumindest einem mit der Abgasleitung (3) verbundenen Abgaskatalysator (32, 33), wobei
stromaufwärts des Partikelfilters (31) bzw. des Abgaskatalysators (32) ein Heizkatalysator (2) angeordnet ist, welcher dazu eingerichtet ist, zugeführten Kraftstoff mit Abgas umzusetzen, wobei der Heizkatalysator (2) ein Gehäuse (25) aufweist, welches einen Einlass (21) und einen Auslass (22) aufweist und welches so mit der Abgasleitung (3) verbunden ist, dass ein Teilstrom des in der Abgasleitung (3) strömenden Abgases durch den Einlass (21) in das Gehäuse (25) zugeführt und durch den Auslass (22) aus dem Gehäuse (25) in die Abgasleitung (3) stromabwärts des Einlasses (21) abgeführt werden kann, **dadurch gekennzeichnet, dass** der Heizkatalysator (2) weiterhin eine Lochplatte (4) enthält, welche dazu eingerichtet ist, dem Heizkatalysator (2) das Abgas zuzuführen und
in der Abgasleitung (3) zwischen Einlass (21) und Auslass (22) eine Druckreduktionseinrichtung (7) vorhanden ist.

2. Abgasreinigungsvorrichtung nach Anspruch 1, **dadurch gekennzeichnet, dass** die Lochplatte (4) Bohrungen oder Öffnungen mit einem Durchmesser von 0,5 mm bis 1,5 mm oder von 0,3 mm bis 1,0 mm oder von 1,0 mm bis 3,5 mm aufweist oder
dass die Lochplatte einen Sinterkörper oder einen Schaum oder ein Gewirk oder ein Geflecht oder ein Gestrick enthält oder daraus besteht.

3. Abgasreinigungsvorrichtung nach Anspruch 1 oder 2, **dadurch gekennzeichnet, dass** der Heizkatalysator (2) einen elektrisch beheizbaren Träger (5) aufweist.

4. Abgasreinigungsvorrichtung nach einem der Ansprüche 1 bis 3, **dadurch gekennzeichnet, dass** auf der der Lochplatte (4) gegenüberliegenden Seite des Heizkatalysators (2) eine Kraftstoffplatte (6) angeordnet ist.

5. Abgasreinigungsvorrichtung nach Anspruch 4, **dadurch gekennzeichnet, dass** die Kraftstoffplatte (6) mit einer kapillaren Transporteinrichtung versehen ist.

6. Abgasreinigungsvorrichtung nach einem der Ansprüche 1 bis 5, **dadurch gekennzeichnet, dass** der Heizkatalysator (2) weiterhin eine Luftzufuhreinrichtung aufweist.

7. Abgasreinigungsvorrichtung nach einem der Ansprüche 1 bis 6, **dadurch gekennzeichnet,. dass** die Druckreduktionseinrichtung (7) ausgewählt ist aus einer Drosselklappe und/oder einem Mischer und/oder einer Turbine (861) eines Turboladers (86).

8. Brennkraftmaschine (8) mit einer Abgasreinigungsvorrichtung (1) nach einem der Ansprüche 1 bis 7.

9. Verfahren zur Abgasreinigung, bei welchem Abgas mit zumindest einer Abgasleitung (3) zumindest einem Partikelfilter (31) und/oder zumindest einem Abgaskatalysator (32, 33) zugeführt wird, wobei
stromaufwärts des Partikelfilters (31) bzw. des Abgaskatalysators (32, 33) ein Heizkatalysator (2) angeordnet ist, welchem zumindest Kraftstoff und Abgas zugeführt wird, wobei der Kraftstoff mit dem Abgas zumindest teilweise umgesetzt wird, um den Partikelfilter (31) bzw. den Abgaskatalysator (32, 33) aufzuheizen, wobei der Heizkatalysator (2) ein Gehäuse (25) aufweist, welches einen Einlass (21) und einen Auslass (22) aufweist und welches so mit der Abgasleitung (3) verbunden ist, dass ein Teilstrom des in der Abgasleitung (3) strömenden Abgases durch den Einlass (21) in das Gehäuse (25) zugeführt und durch den Auslass (22) aus dem Gehäuse (25) in die Abgasleitung (3) stromabwärts des Einlasses (21) abgeführt wird, **dadurch gekennzeichnet, dass**
dem Heizkatalysator (2) das Abgas über zumindest eine Lochplatte (4)zugeführt wird und
der Teilstrom stromaufwärts einer Druckreduktionseinrichtung (7) in den Heizkatalysator (2) eingeführt und stromabwärts der Druckreduktionseinrichtung (7) in die Abgasleitung (3) abgegeben wird.

10. Verfahren nach Anspruch 9, **dadurch gekennzeichnet, dass** der Heizkatalysator (2) zumindest zeitweise elektrisch beheizt wird.

11. Verfahren nach einem der Ansprüche 9 bis 10, **dadurch gekennzeichnet, dass** in einem ersten Betriebszustand der Kraftstoff mit dem Abgas überwiegend oxidiert wird und in einem zweiten Betriebszustand der Kraftstoff überwiegend zu einem Reformat umgesetzt wird.

12. Verfahren nach einem der Ansprüche 9 bis 11, **dadurch gekennzeichnet, dass** der Kraftstoff auf eine Kraftstoffplatte (6) aufgebracht wird, welche auf der der Lochplatte (4) gegenüberliegenden Seite des Heizkatalysators (2) angeordnet ist.

13. Verfahren nach Anspruch 12, **dadurch gekennzeichnet, dass** der Kraftstoff auf der Kraftstoffplatte (6) mit einer kapillaren Transporteinrichtung verteilt wird.

14. Verfahren nach einem der Ansprüche 9 bis 13, **dadurch gekennzeichnet, dass** die Druckreduktionseinrichtung (7) ausgewählt ist aus einer Drosselklappe und/oder einem Mischer und/oder einer Turbine (861) eines Turboladers (86) .

15. Verfahren nach einem der Ansprüche 9 bis 14, **dadurch gekennzeichnet, dass** dem Heizkatalysator (2) weiterhin mittels einer Luftzufuhreinrichtung Umgebungsluft zugeführt wird.

## Claims

1. Exhaust emission control device (1), comprising at least one exhaust gas line (3) and at least one particulate filter (31) connected to the exhaust gas line (3) and/or at least one exhaust gas catalytic converter (32, 33) connected to the exhaust gas line (3), wherein a heated catalyst (2) is arranged upstream of the particulate filter (31) and/or the exhaust gas catalytic converter (32) and is designed to react supplied fuel with exhaust gas, the heated catalyst (2) having a housing (25), which has an inlet (21) and an outlet (22) and which is connected to the exhaust gas line (3) in such a way that a partial flow of the exhaust gas flowing in the exhaust gas line (3) can be fed through the inlet (21) into the housing (25) and can be discharged from the housing (25) through the outlet (22) into the exhaust gas line (3) downstream of the inlet (21), **characterized in that** the heated catalyst (2) further contains a perforated plate (4), which is designed to supply the exhaust gas to the heated catalyst (2) and a pressure reduction device (7) is available in the exhaust gas line (3) between inlet (21) and outlet (22).

2. Exhaust emission control device according to claim 1, **characterized in that** the perforated plate (4) includes bores or openings having a diameter of 0.5 mm to 1.5 mm, or of 0.3 mm to 1.0 mm, or of 1.0 mm to 3.5 mm, or
**in that** the perforated plate contains or consists of a sintered body or foam or woven fabric or braiding or knitwear.

3. Exhaust emission control device according to claim 1 or 2, **characterized in that** the heated catalyst (2) has an electrically heatable support (5).

4. Exhaust emission control device according to any of claims 1 to 3, **characterized in that** a fuel plate (6) is arranged on the side of the heated catalyst (2) that is opposite the perforated plate (4).

5. Exhaust emission control device according to claim 4, **characterized in that** the fuel plate (6) is provided with a capillary transport device.

6. Exhaust emission control device according to any of claims 1 to 5, **characterized in that** the heated catalyst (2) further includes an air supply device.

7. Exhaust emission control device according to any of claims 1 to 6, **characterized in that** the pressure reduction device (7) is selected from a throttle valve and/or a mixer and/or a turbine (861) of a turbocharger (86).

8. Internal combustion engine (8) having an exhaust emission control device (1) according to any of claims 1 to 7.

9. Method for exhaust emission control, wherein exhaust gas is supplied with at least one exhaust gas line (3) to at least one particulate filter (31) and/or at least one exhaust gas catalytic converter (32, 33), wherein
a heated catalyst (2) is arranged upstream of the particulate filter (31) or the exhaust gas catalytic converter (32, 33), which catalyst is supplied with at least fuel and exhaust gas, the fuel being at least partially reacted with the exhaust gas to heat the particulate filter (31) or the exhaust gas catalytic converter (32, 33), the heated catalyst (2) having a housing (25), which has an inlet (21) and an outlet (22) and which is connected to the exhaust gas line (3) in such a way that a partial flow of the exhaust gas flowing in the exhaust gas line (3) is supplied through the inlet (21) into the housing (25) and is discharged from the housing (25) through the outlet (22) into the exhaust gas line (3) downstream of the inlet (21),
**characterized in that**
the exhaust gas is supplied to the heated catalyst (2) via at least one perforated plate (4) and
the partial flow is introduced into the heated catalyst (2) upstream of a pressure reduction device (7) and discharged into the exhaust gas line (3) downstream of the pressure reduction device (7).

10. Method according to claim 9, **characterized in that** the heated catalyst (2) is at least temporarily electrically heated.

11. Method according to any of claims 9 to 10, **characterized in that** the fuel is predominantly oxidized with the exhaust gas in a first operating state and the fuel is predominantly reacted to form a reformate in a second operating state.

12. Method according to any of claims 9 to 11, **characterized in that** the fuel is applied to a fuel plate (6) which is arranged on the side of the heated catalyst (2) that is opposite the perforated plate (4).

13. Method according to claim 12, **characterized in that** the fuel is distributed over the fuel plate (6) by means of a capillary transport device.

14. Method according to any of claims 9 to 13, **characterized in that** the pressure reduction device (7) is selected from a throttle valve and/or a mixer and/or a turbine (861) of a turbocharger (86).

15. Method according to any of claims 9 to 14, **characterized in that** ambient air is additionally supplied to the heated catalyst (2) by means of an air supply device.

## Revendications

1. Dispositif d'épuration des gaz d'échappement (1) comprenant au moins une conduite d'échappement (3) et au moins un filtre à particules (31) relié à la conduite d'échappement (3) et/ou au moins un catalyseur d'échappement (32, 33) relié à la conduite d'échappement (3),
dans lequel
un catalyseur de chauffage (2) est disposé en amont du filtre à particules (31) ou du catalyseur d'échappement (32, 33), lequel est conçu pour faire réagir le carburant amené avec les gaz d'échappement, le catalyseur de chauffage (2) comprenant un boîtier (25) qui présente une entrée (21) et une sortie (22) et qui est relié à la conduite d'échappement (3) de telle sorte qu'un flux partiel des gaz d'échappement circulant dans la conduite d'échappement (3) peut être amené jusque dans le boîtier (25) par l'entrée (21) et être évacué hors du boîtier (25) par la sortie (22) jusque dans la conduite d'échappement (3) en aval de l'entrée (21),
**caractérisé en ce que**
le catalyseur de chauffage (2) comprend en outre une plaque perforée (4) qui est conçue pour amener les gaz d'échappement au catalyseur de chauffage (2), et
un moyen de réduction de pression (7) est prévu dans la conduite d'échappement (3) entre l'entrée (21) et la sortie (22).

2. Dispositif d'épuration des gaz d'échappement selon la revendication 1, **caractérisé en ce que** la plaque perforée (4) présente des perçages ou des orifices d'un diamètre de 0,5 mm à 1,5 mm ou de 0,3 mm à 1,0 mm ou de 1,0 mm à 3,5 mm, ou
la plaque perforée comprend ou est constituée d'un corps fritté ou d'une mousse ou d'un maillage ou d'un treillis ou d'un tricotage.

3. Dispositif d'épuration des gaz d'échappement selon la revendication 1 ou 2,
**caractérisé en ce que** le catalyseur de chauffage (2) comprend un support (5) pouvant être chauffé électriquement.

4. Dispositif d'épuration des gaz d'échappement selon l'une des revendications 1 à 3,
**caractérisé en ce qu'**une plaque à carburant (6) est disposée sur le côté du catalyseur de chauffage (2) opposé à la plaque perforée (4).

5. Dispositif d'épuration des gaz d'échappement selon la revendication 4, **caractérisé en ce que** la plaque à carburant (6) est pourvue d'un moyen de transport capillaire.

6. Dispositif d'épuration des gaz d'échappement selon l'une des revendications 1 à 5,
**caractérisé en ce que** le catalyseur de chauffage (2) comprend en outre une unité d'alimentation en air.

7. Dispositif d'épuration des gaz d'échappement selon l'une des revendications 1 à 6,
**caractérisé en ce que** le moyen de réduction de pression (7) est choisi parmi un papillon et/ou un mélangeur et/ou une turbine (861) d'un turbocompresseur (86).

8. Moteur à combustion interne (8) comportant un dispositif d'épuration des gaz d'échappement (1) selon l'une des revendications 1 à 7.

9. Procédé d'épuration des gaz d'échappement, dans lequel les gaz d'échappement sont amenés par au moins une conduite d'échappement (3) à au moins un filtre à particules (31) et/ou à au moins un catalyseur d'échappement (32, 33),
dans lequel
un catalyseur de chauffage (2) est disposé en amont du filtre à particules (31) ou du catalyseur d'échappement (32, 33), auquel sont amenés au moins du carburant et des gaz d'échappement, le carburant étant amené à réagir au moins partiellement avec les gaz d'échappement, afin de chauffer le filtre à particules (31) ou le catalyseur d'échappement (32, 33), le catalyseur de chauffage (2) comprenant un boîtier (25) qui présente une entrée (21) et une sortie (22) et qui est relié à la conduite d'échappement (3) de telle sorte qu'un flux partiel des gaz d'échappement circulant dans la conduite d'échappement (3) est amené jusque dans le boîtier (25) par l'entrée (21) et est évacué hors du boîtier (25) par la sortie (22) jusque dans la conduite d'échappement (3) en aval de l'entrée (21),
**caractérisé en ce que**
le catalyseur de chauffage (2) est alimenté en gaz d'échappement par au moins une plaque perforée (4), et
le flux partiel est introduit dans le catalyseur de chauffage (2) en amont d'un moyen de réduction de pression (7) et est évacué jusque dans la conduite d'échappement (3) en aval du moyen de réduction de pression (7).

10. Procédé selon la revendication 9,
**caractérisé en ce que** le catalyseur de chauffage (2) est chauffé électriquement au moins temporairement.

11. Procédé selon l'une des revendications 9 à 10,
**caractérisé en ce que**, dans un premier état de fonctionnement, le carburant est principalement oxydé avec les gaz d'échappement et, dans un deuxième état de fonctionnement, le carburant est principalement transformé en un reformat.

12. Procédé selon l'une des revendications 9 à 11,
**caractérisé en ce que** le carburant est appliqué sur une plaque à carburant (6) qui est disposée sur le côté du catalyseur de chauffage (2) opposé à la plaque perforée (4).

13. Procédé selon la revendication 12,
**caractérisé en ce que** le carburant sur la plaque à carburant (6) est réparti à l'aide d'un moyen de transport capillaire.

14. Procédé selon l'une des revendications 9 à 13,
**caractérisé en ce que** le moyen de réduction de pression (7) est choisi parmi un papillon et/ou un mélangeur et/ou une turbine (861) d'un turbocompresseur (86).

15. Procédé selon l'une des revendications 9 à 14,
**caractérisé en ce que** le catalyseur de chauffage (2) est en outre alimenté en air ambiant à l'aide d'une unité d'alimentation en air.
